# EUROPÄISCHE PATENTSCHRIFT

(11) **EP 1 737 872 B1**
(45) Veröffentlichungstag und Bekanntmachung des Hinweises auf die Patenterteilung: **15.08.2007**
(21) Anmeldenummer: 05729622.0
(22) Anmeldetag: 11.04.2005
(51) Int. Cl.: C07F 7/08

(54) **VERFAHREN ZUR HERSTELLUNG VON CARBOXYRESTE AUFWEISENDEN ORGANOSILICIUMVERBINDUNGEN**
METHOD FOR THE PRODUCTION OF ORGANOSILICON COMPOUNDS COMPRISING CARBOXY RADICALS
PROCEDE POUR PRODUIRE DES COMPOSES D'ORGANOSILICIUM PRESENTANT DES RADICAUX CARBOXY

(30) Priorität: 21.04.2004 DE 102004019376
(43) Veröffentlichungstag der Anmeldung: 03.01.2007
(73) Patentinhaber: Wacker Chemie AG, 81737 München (DE)
(72) Erfinder: OCHS, Christian, 84489 Burghausen (DE); FRITZ-LANGHALS, Elke, 85521 Ottobrunn (DE)
(74) Vertreter: Deffner-Lehner, Maria
(86) Internationale Anmeldenummer: PCT/EP2005/051588
(87) Internationale Veröffentlichungsnummer: WO 2005/103060

(56) Entgegenhaltungen:
- WO-A-99/52849
- ANELLI P L ET AL: "FAST AND SELECTIVE OXIDATION OF PRIMARY ALCOHOLS TO ALDEHYDES OR TOCARBOXYLIC ACIDS AND OF SECONDARY ALCOHOLS TO KETONES MEDIATED BY OXOAMMONIUM SALTS UNDER TWO-PHASE CONDITIONS" JOURNAL OF ORGANIC CHEMISTRY, AMERICAN CHEMICAL SOCIETY. EASTON, US, Bd. 52, Nr. 12, 12. Juni 1987 (1987-06-12), Seiten 2559-2562, XP000567759 ISSN: 0022-3263

## Beschreibung

Die Erfindung betrifft ein Verfahren zur Herstellung von Carboxyreste aufweisenden Organosiliciumverbindungen.

Carboxygruppen aufweisende Organosiliciumverbindungen werden in großem Umfang als Textilausrüstungsmittel eingesetzt. Bei den so behandelten Textilgeweben werden gute Weichgriffeffekte bei gleichzeitig geringer Vergilbungsneigung erreicht. Ferner kommen Carboxygruppen aufweisende Organopolysiloxane bei der Lederausrüstung und als Trennmittel zum Einsatz.

Zur Herstellung von Carboxyfunktionellen Silanen oder Siloxanen sind verschiedene Methoden bekannt. Die Einführung der Carbonsäuregruppen über Grignard-Verfahren 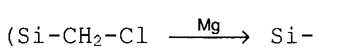 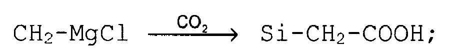 vgl. US 2,763,675), aus Carboxylverbindungen mit aktivierter CH-Gruppe (Reaktion von Halogenalkylsiloxanen mit Cyanessigsäurealkylestern oder Malonestern und anschließende Hydrolyse einschl. Decarboxylierung; vgl. US 3,391,177), sowie die(Co)Hydrolyse propionylchloridfunktioneller Silane (erhältlich durch chlorierende Hydrosilylierung von α,β-ungesättigten Carbonsäurestern mit Halogensilanen; vgl. US 3,143,524) sind jedoch als industrielle Verfahren allein schon aus Kostengründen wenig geeignet. Außerdem stellen die vorgeschlagenen Prozesse hohe Anforderungen an die Reinheit der Edukte und die apparative Seite der Prozessführung.

Nach US 2,900,363, US 2,957,899 und US 2,875,177 können Carboxygruppen aufweisende Organosiliciumverbindungen durch Hydrosilylierung von Acrylnitril und anschließende, sauer oder basisch katalysierte Hydrolyse erhalten werden. Nachteile dieser Methode sind die Verwendung des toxikologisch nicht unbedenklichen Acrylnitrils, der Preis anderer geeigneter, ungesättigter, Nitrilfunktioneller Edukte, sowie die aufgrund des heterogenen Reaktionssystems sehr langsame Hydrolyse, wodurch eine quantitative Ausbeute an freien Carbonsäuregruppen nur sehr aufwendig zu realisieren ist.

Desweiteren werden Carboxygruppen aufweisende Organopolysiloxane dadurch erhalten, indem man SiH-funktionelle Verbindungen mit ungesättigten Carbonsäuren in Gegenwart bekannter Hydrosilylierungskatalysatoren umsetzt. Die Selektivität der Reaktion ist allerdings recht gering, da als signifikante Nebenreaktion die unter Wasserstoffabspaltung verlaufende Kondensation von SiH mit dem aciden Proton der Säuregruppe stattfindet, so daß in erheblichem Ausmaß hydrolyselabile, Si-O-C-verknüpfte Strukturen gebildet werden.

Es wurde daher vorgeschlagen, den aktiven Wasserstoff der ungesättigten Carbonsäure entweder durch Alkylreste (EP 569189 A) oder einen Silylrest (EP 196169 B1; US 4,990,643) zu ersetzen, um nach der Anlagerung der genannten Derivate an SiH-haltige Organosiliciumverbindungen die Carbonsäuregruppierung hydrolytisch wieder freizusetzen. Die Verfahren sind jedoch ebenfalls sehr aufwendig, da die Hydrolyse der Silylschutzgruppe und insbesondere der Alkylester aufgrund des heterogenen Systems große Wassermengen, lange Reaktionszeiten, hohe Temperaturen und - im Falle der Alkylester - zusätzlich starke Säuren bzw. Basen als Katalysator benötigt, was wiederum zu unerwünschten Nebenreaktionen am Siloxangerüst führen kann. Darüber hinaus muss das im Überschuss eingesetzte Wasser nach Ende der Reaktion wieder aus dem heterogenen System entfernt werden, was nur durch Abdestillieren mit Hilfe eines Schleppers wie Toluol möglich ist, da andernfalls die Mischung äußerst stark schäumt.

Nach neueren Patentschriften können Carboxygruppen aufweisende Silane und Siloxane dadurch erhalten werden, indem man an eine SiH-haltige Organosiliciumverbindung einen tertiären Butylester mit olefinischer Doppelbindung , wie z. B. Methacrylsäure-t-butylester oder Undecensäure-t-butylester, in Gegenwart eines Hydrosilylierungskatalysators addiert und anschließend die tertiäre Butylestergruppe unter thermischer oder katalytischer Abspaltung von gasförmigem Isobuten in die entsprechende Carbonsäuregruppe überführt (US 5,504,233, US 5,637,746). Größter Nachteil dieses Verfahrens ist, dass die Abspaltungsreaktion erst bei erhöhter Temperatur glatt verläuft, und dabei große Volumina eines hochentzündlichen, brennbaren Gases mit extrem niedrigem Flammpunkt generiert werden. Insbesondere die mit Luft gebildeten, explosiven Gasgemische stellen ein erhebliches Gefahrenpotential dar. Der Prozess ist somit nur aufwendig zu realisieren und erfordert spezielle apparative Vorkehrungen und Kenntnisse. Weiterhin kommen bei der katalytischen Spaltung des tert. Butylesters starke Säuren, wie p-Toluolsulfonsäure, Methansulfonsäure oder Trifluormethansulfonsäure, im Prozentbereich zum Einsatz, welche ihrerseits in ihrer Eigenschaft als typische Equilibrierungskatalysatoren das Reaktionsgeschehen negativ beeinflussen können.

In WO 99/52849 A1 und Anelli P. L. et al., J. Org, Chem. 1987, 52, 2559-2562 sind Verfahren zur direkten Oxidation von primären Alkoholen zu Carbonsäuren mit Hilfe von NO-haltigen Verbindungen und Oxidationsmitteln beschrieben, wobei es sich bei den Edukten bzw. Produkten nicht um Organosiliciumverbindungen handelt.

Es besteht daher die Aufgabe ein kostengünstiges, einfaches und selektives Verfahren zur Herstellung von Carboxyreste-aufweisenden Organosiliciumverbindungen bereitzustellen, welches die gewünschten Carboxyverbindungen auf einfache und rasche Weise mit hohen Ausbeuten zugänglich macht und welches den stets steigenden Anforderungen in der Technik hinsichtlich Raum-Zeit-Ausbeute sowie universeller Anwendbarkeit genügt. Diese Aufgabe wird durch die vorliegende Erfindung gelöst.

Verfahren zur Herstellung von Carboxyreste-aufweisenden Organosiliciumverbindungen (2) enthaltend Einheiten der Formel

AₐR_{b}X_{c}H_{d}SiO_{(4-a-b-c-d)/2} (III),

wobei A gleich oder verschieden sein kann und einen Rest der Formel 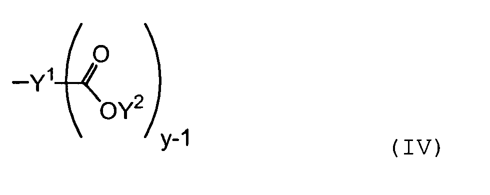 bedeutet,
durch Oxidation von Carbinolreste-aufweisenden Organosiliciumverbindungen (1) enthaltend Einheiten der Formel

A'ₐR_{b}X_{c}H_{d}SiO_{(4-a-b-c-d)/2} (I),

wobei A' gleich oder verschieden sein kann und einen Rest der Formel 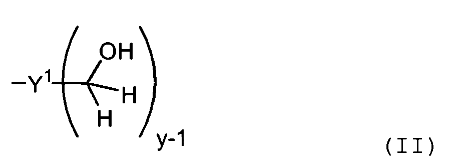 bedeutet,
wobei Y¹ einen zwei- oder mehrwertigen, linearen oder cyclischen, verzweigten oder unverzweigten organischen Rest bedeutet, der gegebenenfalls substituiert und/oder durch die Atome N, O, P, B, Si und S unterbrochen sein kann, ^{y2}ein Wasserstoffatom, ein organisches oder anorganisches Kation, oder einen einwertigen gegebenenfalls substituierten Kohlenwasserstoffrest, der durch Heteroatome unterbrochen sein kann,
y entsprechend der Wertigkeit von Rest Y¹ ≥ 2 ist,
R gleich oder verschieden sein kann und einen einwertigen, SiC-gebundenen gegebenenfalls substituierten Kohlenwasserstoffrest bedeutet,
X gleich oder verschieden sein kann und Chloratom, die Gruppe A' oder einen Rest der Formel -OR¹, mit R¹ gleich Wasserstoffatom oder einwertiger gegebenenfalls substituierter Kohlenwasserstoffrest, der durch Heteroatome unterbrochen sein kann, bedeutet,
a 0, 1 oder 2 ist,
b 0, 1, 2 oder 3 ist,
c 0, 1, 2 oder 3 ist, und
d 0, 1, 2 oder 3 ist,
mit der Maßgabe, dass die Summe a+b+c+d ≤ 4 ist und die Organosiliciumverbindung der Formel (I) pro Molekül mindestens einen Rest A' aufweist die Organosiliciumverbindung der Formel (III) pro Molekül mindestens einen Rest A aufweist,
mit Hilfe eines Mediators (3) ausgewählt aus der Gruppe der aliphatischen, cycloaliphatischen, heterocyclischen und aromatischen NO-, NOH- und 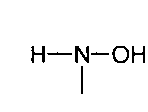 -haltigen Verbindungen
und eines Oxidationsmittels (4),
mit der Maßgabe, dass die Reaktion unter ständiger Kontrolle des pH-Wertes bei einem pH ≥ 3 durchgeführt wird.

Nach dem erfindungsgemäßen Verfahren werden vorzugsweise mindestens 75 mol-%, bevorzugt mindestens 80 mol-%, besonders bevorzugt mindestens 85 mol-%, insbesondere mindestens 90 mol-%, der in den eingesetzten Organosiliciumverbindungen (1) enthaltenen Carbinolreste zu Carboxyresten oxidiert.

Für die Oxidation sind prinzipiell alle Organosiliciumverbindungen (1) geeignet, sofern sie primäre Carbinolgruppen besitzen.

Bei den im erfindungsgemäßen Verfahren eingesetzten Organosiliciumverbindungen (1) kann es sich sowohl um Silane handeln, d.h. Verbindungen der Formel (I) mit a+b+c+d=4, als auch um Polysiloxane oder Organosiliconharz handeln, d.h. Verbindungen enthaltend Einheiten der Formel (I) mit a+b+c+d≤3, wobei im Rahmen der vorliegenden Erfindung von dem Begriff Polysiloxan sowohl polymere, oligomere wie auch dimere Siloxane mitumfasst werden sollen. Bevorzugt handelt es sich bei den im erfindungsgemäßen Verfahren eingesetzten Verbindungen (1) um Organopolysiloxane und Organosiliconharz, besonders bevorzugt um Organopolysiloxane, insbesondere um solche, die aus Einheiten der Formel (I) bestehen.

Bevorzugt werden als Carbinolreste-aufweisende Organosiliciumverbindungen (1) solche der Formel

A'ᵥR_{w}X_{(3-v-w)}Si (I'),

A'ᵥR₃₋ᵥSiO(SiR₂O)ₙ(SiRA'O)ₒSiR₃₋ᵥA'ᵥ (I"),

[A'ᵥR₃₋ᵥSiO_{1/2}]ₛ[SiO_{4/2}] (I"'),

wobei A', R und X die oben dafür angegebene Bedeutung haben,
v 0, 1, 2 oder 3, bevorzugt 0 oder 1, ist
w 0, 1, 2 oder 3 ist,
n 0 oder eine ganze Zahl von 1 bis 2000 ist,
o 0 oder eine ganze Zahl von 1 bis 2000, bevorzugt 0 bis 500, ist,
s einen Wert von einschließlich 0,2 bis 6, bevorzugt 0,4 bis 4, annehmen kann und die Anzahl M-Einheiten [A'ᵥR₃₋ᵥSiO_{1/2}] pro Q-Einheit [SiO_{4/2}] im Organosiliconharz beschreibt,
mit der Maßgabe, dass sie pro Molekül mindestens einen Rest A' enthalten,
eingesetzt.

Bevorzugt werden daher als Carboxyreste-aufweisende Organosiliciumverbindungen (2) solche der Formel

AᵥR_{w}X_{(3-v-w)}Si (III'),

AᵥR₃₋ᵥSiO (SiR₂O)ₙ(SiRAO)ₒSiR₃₋ᵥAᵥ (III"),

[AᵥR₃₋ᵥSiO_{1/2}]ₛ[SiO_{4/2}] (III''')

wobei A, R, X, v, w, n, o und s die oben dafür angegebene Bedeutung haben,
mit der Maßgabe, dass sie pro Molekül mindestens einen Rest A enthalten,
erhalten.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2, 2, 2, 2*'*, 2*'*, 2*'* -Hexafluorisopropylrest, der Heptafluorisopropylrest und Halogenarylreste, wie der o-, m- und p-Chlorphenylrest, acylierte Aminoalkylreste, wie der N-Acetyl-Aminopropyl-, N-Acetyl-Cyclohexylaminopropyl-, N-Acetyl-Dimethylaminopropyl-, N-Acetyl-Diethylaminopropylrest oder der N, N'-Diacetyl-Aminoethylaminopropylrest, quatfunktionelle Reste, wie z.B. - (CH₂)₃-N (CH₃)₃⁺ und - (CH₂)₃-NH-CH₂-CH (OH) -CH₂-N (CH₃)₃⁺, einschließlich der zur Kompensation der kationischen Ladung notwendigen Anionen, Hydroxyfunktionelle Reste, wie die von sek. oder tert. aliphatischen oder aromatischen Alkoholen, wie z.B. der Phenol- oder Eugenolrest, carbonsäurefunktionelle Reste sowie deren Derivate oder Salze, wie der Essigsäure-, 3-Carboxy-propyl-, 4-Carboxy-butyl-, 10-Carboxy-decyl-, 3-(2,5-Dioxotetrahydrofuranyl)-propyl-, 3-(Ethan-1,2-dicarbonsäure)-propyl-, 3-Acryloxy-propyl-, 3-Methacryloxy-propyl- oder Undecensilylesterrest, epoxyfunktionelle Reste, wie z. B. solche der Gruppe bestehend aus 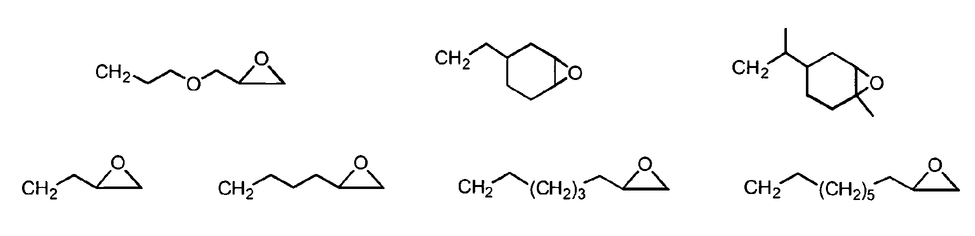 ketonfunktionelle Reste, Alkyl- oder Acylterminierte, SiC- oder SiOC-gebundene Polyalkylenoxid-Reste, wie z.B. solche, die sich von Polyethylenglycol, Polypropylenglycol, Poly-(1,4-butandiol) und deren Mischpolymerisaten ableiten, phosphonatofunktionelle Reste, wie z.B. Phosphonatoalkylreste, silalactonfunktionelle Reste sowie glykosidfunktionelle Reste, wie z. B. solche, bei denen der Glykosidrest, der aus 1 bis 10 Monosaccarideinheiten aufgebaut sein kann, über einen Alkylen- oder Oxyalkylenspacer gebunden ist, und bei denen zumindest etwaige primäre Hydroxygruppen mit Acyl- oder Alkylschutzgruppen versehen sind.

Bevorzugt handelt es sich bei dem Rest R um einen gegebenenfalls mit Halogengruppen, tert. Hydroxygruppen, acylierten Amingruppen, quarternären Stickstoff aufweisenden Gruppen, Carbonsäure- oder Carbonsäurederivatgruppen oder Epoxygruppen substituierten Kohlenwasserstoffrest mit 1 bis 18 Kohlenstoffatom(en) oder um einen Alkyl- oder Acylterminierten SiC- oder SiOC-gebundenen Polyalkylenoxid-Rest, besonders bevorzugt um den Methyl-, Ethyl-, Vinyl-, n-Propyl-, n-Octyl-, n-Dodecyl-, n-Octadecyl- und Phenylrest, insbesondere um den Methyl- und Phenylrest.

Falls es sich bei den erfindungsgemäßen Organosiliciumverbindungen um Organopolysiloxane handelt, haben mindestens 50%, besonders bevorzugt mindestens 90%, aller Reste R die Bedeutung von Methyl- oder Phenylrest.

Beispiele für Reste R¹ sind die für Rest R angegebenen Beispiele. Bevorzugt handelt es sich bei Rest R¹ um Wasserstoffatom oder einen Alkylrest mit 1 bis 8 Kohlenstoffatom(en), der gegebenenfalls durch Ethersauerstoffatome unterbrochen sein kann. Besonders bevorzugt sind Wasserstoffatom, der Methyl-, Ethyl-, Propyl- und Butylrest.

Beispiele für Rest X sind Chloratom, die OH-Gruppe, die Gruppe A' sowie Alkoxyreste, wie der Methoxy-, Ethoxy-, n-Propoxy-, i-Propoxy-, 1-Butoxy-, 2-Butoxy, 1-Pentyloxy, 1-Hexyloxy-, 1-Octyloxy-, 2-Octyloxy-, i-Octyloxy-, 1-Decyloxy-, 1-Dodecyloxy-, Myristyloxy-, Cetyloxy- oder Stearyloxyrest. Bevorzugt handelt es sich bei Rest X um Chloratom, den Rest A', die OH-Gruppe, den Methoxy-, Ethoxy-, Propoxy-, Butoxy-, Myristyloxy-, Cetyloxy- oder Stearyloxyrest, besonders bevorzugt um Chloratom, die OH-Gruppe, den Methoxy-, Ethoxy-, Propoxy- und Butoxyrest.

Beispiele für Rest Y¹ sind Alkylenreste, wie der Methylen-, Ethylen-, Propylen-, 2-Methyl-propylen-, Butylen-, Pentylen-, Hexylen-, Heptylen-, Octylen-, Nonylen-, Undecylen- und Heptadecylenrest, cyclische und polycyclische Alkylenreste, wie z. B. der Cyclohexylen-, Methylcyclohexylen-, Dimethylcyclohexylen- und Norbornylenrest, ungesättigte Alkylenreste, wie der Ethenylen-, 1-Propenylen-, 1-Butenylen- und 2-Butenylenrest, ether- und polyetherfunktionelle Alkylenreste, sowie Alkylenreste, welche durch eine Carbonsäurederivatgruppe, wie z. B. Carbonsäurester- oder Carbonsäureamidgruppe, oder Kohlensäurederivatgruppe, wie z. B. Kohlensäureester-, Urethan- oder Harnstoffgruppe, unterbrochen sind.

Vorzugsweise handelt es sich bei Rest Y¹ um einen zwei- bis zehnwertigen, bevorzugt zwei bis fünfwertigen, Kohlenwasserstoffrest, der gegebenenfalls durch eine oder mehrere Einheiten -C(O)-, -C(O)O-, -C(O)NR¹-, -O-C(O)O-, -O-C(O)NR¹-, -NR¹-C(O)-NR¹-, -O-, -S- unterbrochen und mit tert. Hydroxy-, Alkoxy-, Mercaptoalkyl-, Carbonyl-, Carboxyl-, Nitril- oder Oxiranylgruppen substituiert sein kann.

Bevorzugt handelt es sich bei Rest Y¹ um
A) den Ethylen-, Propylen-, 2-Methyl-propylen-, Butylen-, Pentylen-, Nonylen- und Undecylenrest, die Reste 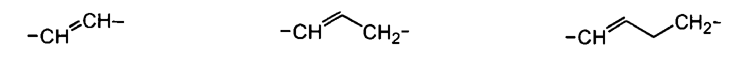 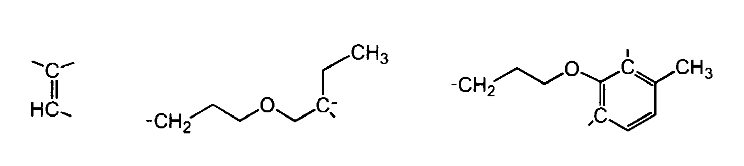 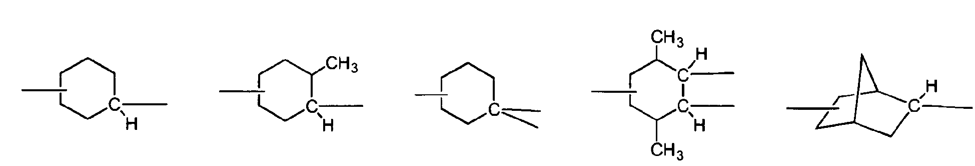
B) einen Rest der Formel

   -R²-(Z -CH₂CH₂)_{z}-Z'-R²- (V),

   wobei die Reste R² gleich oder verschieden sein können und einen zweiwertigen Kohlenwasserstoffrest mit 1 bis 10 (bevorzugt 1 bis 6) Kohlenstoffatomen bedeuten, Z die Einheit - O- oder -N[-C(O)-(CH₂)ₕ-H]-, mit h ≥ 1 (bevorzugt 1-6, besonders bevorzugt 1-3), und Z*'* die Gruppierungen -O-C(O)-, -NH-C(O)-, -O-C(O)O-, -NH-C(O)O- oder -NH-C(O)NH-, bevorzugt -O-C(O)- oder -NH-C(O)-, darstellen, und z eine ganze Zahl von 0 bis 4 (bevorzugt 0 oder 1) ist, oder
C) einen Rest der Formel

   -R³-{[CH₂CH₂O]ₑ-[C₃H₆O]_{f}-[(CH₂)₄O]_{g}-B-}ₓ₋₁ (VI),

   wobei R³ einen zweiwertigen, dreiwertigen oder vierwertigen organischen Rest mit 2 bis 10 Kohlenstoffatomen bedeutet, der durch eine oder mehrere Einheiten 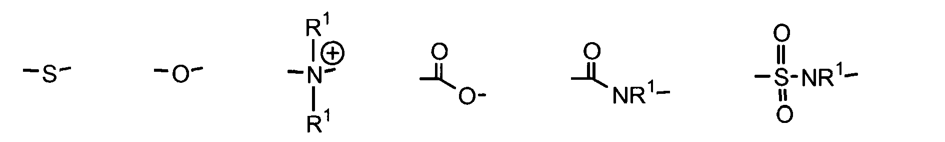 substituiert sein kann, B einen Methylen-, Ethylen- oder n-Propylen-Spacer bedeutet, e, f, g jeweils unabhängig voneinander 0 oder eine ganze Zahl von 1-200, bevorzugt 0-100, besonders bevorzugt 0-50, sind, mit der Maßgabe, dass die Summe e+f+g ≥ 1 ist, und x entsprechend der Wertigkeit von Rest R³ den Wert 2, 3 oder 4 annehmen kann.

Besonders bevorzugt handelt es sich bei Rest Y¹ um den Ethylen-, Propylen-, 2-Methyl-propylen-, Butylen-, Pentylen-, Nonylen- und Undecylenrest, die Reste 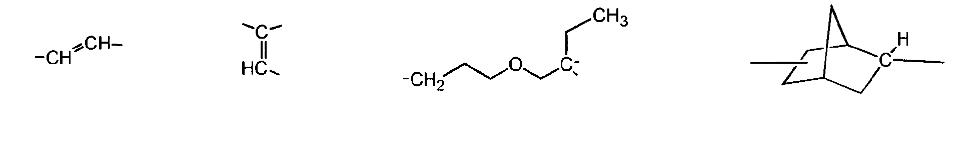 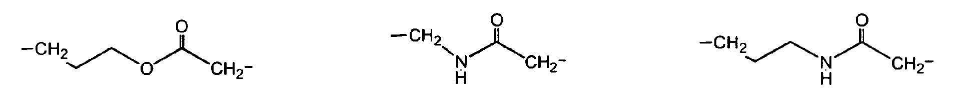 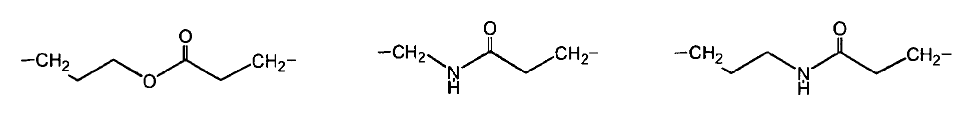 sowie 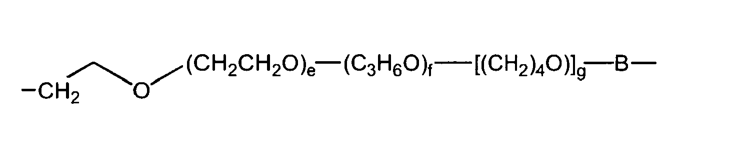 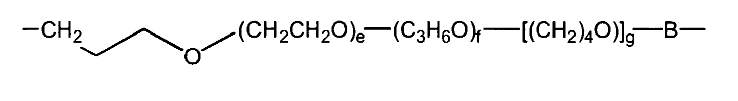 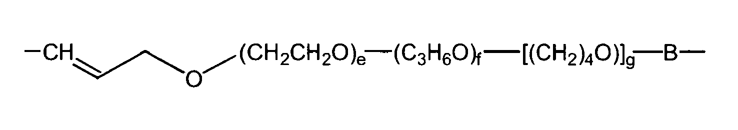 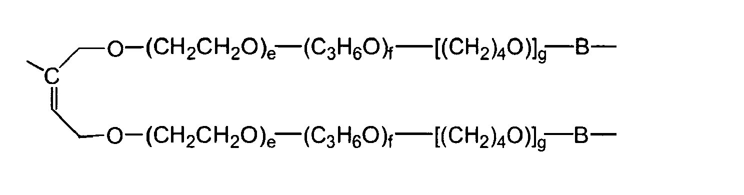 mit B, e, f und g in der oben dafür angegebenen Bedeutung.

Vorzugsweise ist y entsprechend der Wertigkeit von Y¹ eine ganze Zahl von 2 bis 10, bevorzugt 2 bis 5.

Bevorzugt handelt es sich bei Rest Y² um Wasserstoffatom, ein organisches oder anorganisches Kation oder einen einwertigen Kohlenwasserstoffrest mit 1 bis 18 Kohlenstoffatom(en), besonders bevorzugt um Wasserstoffatom, Tetraalkylammonium, Trialkylammonium, Dialkylammonium, Alkylammonium, Ammonium, Lithium, Natrium, Kalium und Cäsium.

Als Mediator (3) wird vorzugsweise mindestens eine Verbindung ausgewählt aus der Gruppe der aliphatischen, cycloaliphatischen, heterocyclischen oder aromatischen Verbindungen, die mindestens eine N-Hydroxy-, Oxim-, Nitroso-, N-Oxyl- oder N-Oxi-Funktion enthält, eingesetzt. Beispiele für solche Verbindungen sind detailliert beschrieben in US 6,169,213 B1, insbesondere Spalte 5, Zeile 63 bis Spalte 25, Zeile 58, und US 2003073871 A1, insbesondere Seite 2, Absatz [0023] bis Seite 3, Absatz [0030] einschl..

Als Mediatoren (3) bevorzugt sind Nitroxyl-Radikale der allgemeinen Formeln (XI) und (XII) 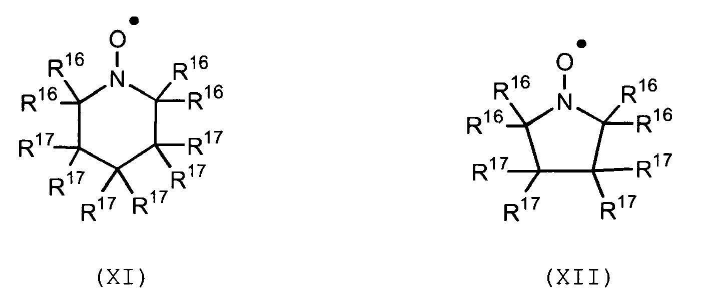 wobei
R¹⁶ gleich oder verschieden ist und Phenyl-, Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Rest bedeutet, wobei
die Phenylreste unsubstituiert oder ein- oder mehrfach mit einem Rest R¹⁸ substituiert sein können, und die Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Reste gesättigt oder ungesättigt, verzweigt oder unverzweigt sein können und mit einem Rest R¹⁸ ein- oder mehrfach substituiert sein können, wobei
R¹⁸ ein- oder mehrfach vorhanden sein kann und gleich oder verschieden ist und Hydroxy-, Formyl-, Carboxyrest, Ester oder Salz des Carboxyrests, Carbamoyl-, Sulfono-, Sulfamoyl-, Nitro-, Nitroso-, Amino, Phenyl-, Benzoyl-, C₁-C₅-Alkyl-, C₁-C₅-Alkoxyrest, C₁-C₅-Alkylcarbonyl-Rest bedeutet,
R¹⁷ gleich oder verschieden ist und ein Wasserstoffatom oder Hydroxy-, Mercapto-, Formyl-, Cyano-, Carbamoyl-, Carboxyrest, Ester oder Salz des Carboxyrests, Sulfonorest, Ester oder Salz des Sulfonorests, Sulfamoyl-, Nitro-, Nitroso-, Amino-, Phenyl-, Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Rest, Phospho-, Phosphono-, Phosphonooxyrest, Ester oder Salz des Phosphonooxyrests bedeutet, wobei
die Carbamoyl-, Sulfamoyl-, Amino-, Mercapto- und Phenylreste unsubstituiert oder ein- oder mehrfach mit einem Rest R¹² substituiert sein können,
und die Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Reste gesättigt oder ungesättigt, verzweigt oder unverzweigt sein können und mit einem Rest R¹² ein- oder mehrfach substituiert sein können,
und eine [-CR¹⁷R¹⁷-]-Gruppe durch Sauerstoff, einen ggf. mit C₁-C₅-Alkylsubstituierten Iminorest, einen (Hydroxy)iminorest, eine Carbonylfunktion oder eine ggf. mit R¹² mono- oder disubstituierten Vinylidenfunktion ersetzt sein kann,
und zwei benachbarte Gruppen [-CR¹⁷R¹⁷-] durch eine Gruppe [-CR¹⁷=CR¹⁷-], [-CR¹⁷=N-] oder [-CR¹⁷=N(O)-] ersetzt sein können.

Nach dem erfindungsgemäßen Verfahren bevorzugt eingesetzte Mediatoren (3) sind:
2,2,6,6-Tetramethyl-piperidin-1-oxyl (TEMPO),
4-Hydroxy-2,2,6,6-tetramethyl-piperidin-1-oxyl,
4-Acetamido-2,2,6,6-tetramethyl-piperidin-1-oxyl,
4-Acetoxy-2,2,6,6-tetramethyl-piperidin-1-oxyl,
4-Benzoyloxy-2,2,6,6-tetramethyl-piperidin-1-oxyl,
PIPO (polymer immobilised piperidinyloxyl),
3-Amino-N-hydroxyphthalimid,
4-Amino-N-hydroxyphthalimid,
N-Hydroxyphthalimid,
3-Hydroxy-N-hydroxyphthalimid,
3-Methoxy-N-hydroxyphthalimid,
3,4-Dimethoxy-N-hydroxyphthalimid,
4,5-Dimethoxy-N-hydroxyphthalimid,
3,6-Dihydroxy-N-hydroxyphthalimid,
3,6-Dimethoxy-N-hydroxyphthalimid,
3-Methyl-N-hydroxyphthalimid,
4-Methyl-N-hydroxyphthalimid,
3,4-Dimethyl-N-hydroxyphthalimid,
3,5-Dimethyl-N-hydroxyphthalimid,
3,6-Dimethyl-N-hydroxyphthalimid,
3-Isopropyl-6-methyl-N-hydroxyphthalimid,
3-Nitro-N-hydroxyphthalimid,
4-Nitro-N-hydroxyphthalimid,
1-Hydroxy-1H-benzotriazol,
Violursäure,
N-Hydroxyacetanilid,
3-Nitrosochinolin-2,4-diol,
2,4-Dihydroxy-3-nitrosopyridin,
2,6-Dihydroxy-3-nitrosopyridin,
2,4,-Dinitroso-1,3-dihydroxybenzol,
2-Nitroso-1-naphthol-4-sulfonsäure und
1-Nitroso-2-naphthol-3,6-disulfonsäure,
   wobei
2,2,6,6-Tetramethyl-piperidin-1-oxyl (TEMPO),
4-Hydroxy-2,2,6,6-tetramethyl-piperidin-1-oxyl,
4-Amino-2,2,6,6-tetramethyl-piperidin-1-oxyl,
4-Acetoxy-2,2,6,6-tetramethyl-piperidin-1-oxyl,
4-Benzoyloxy-2,2,6,6-tetramethyl-piperidin-1-oxyl und
PIPO (polymer immobilised piperidinyloxyl)
besonders bevorzugt sind.

In einer besonderen Ausführungsform können die Nitroxyl-Radikale der allgemeinen Formeln (XI) und (XII) auch über einen oder mehrere Reste R¹⁷ mit einer polymeren Struktur verknüpft sein. In der Literatur ist eine Vielzahl solcher polymergebundenen Nitroxyl-Radikale beschrieben (vgl. z. B. die in EP 1 302 456 A1, Seite 4, Zeilen 39 bis 43, zitierte Literatur) Beispiele sind PIPO (polymer immobilised piperidinyloxyl), SiO₂-geträgertes TEMPO, Polystyrol- und Polyacrylsäure-geträgertes TEMPO.

Nach dem erfindungsgemäßen Verfahren wird der Mediator (3) vorzugsweise in Mengen von 0,01 bis 100 Mol-%, bevorzugt 0,1 bis 20 Mol-%, insbesondere bevorzugt 0,1 bis 5 Mol-%, bezogen auf die molare Menge der in den eingesetzten Organosiliciumverbindungen enthaltenen Carbinolgruppen, verwendet.

Das erfindungsgemäße Verfahren kann mit einem oder mehreren der beschriebenen Mediatoren (3), bevorzugt mit einem oder zwei Mediatoren (3), besonders bevorzugt mit einem Mediator (3) durchgeführt werden. Der Mediator (3) kann in einer organischen oder wässrigen Phase gelöst oder in geträgerter Form als eigenständige Phase eingesetzt werden.

Nach dem erfindungsgemäßen Verfahren wird aus dem Mediator (3) die entsprechende, aktive Oxoammonium-Spezies in situ durch das Oxidationsmittel erzeugt und nicht isoliert. In einer besonderen Ausführungsform kann der Mediator (3) aber auch in einer separaten, vorgelagerten Oxidationsreaktion in die aktive Oxoammonium-Spezies überführt, isoliert und dann separat eingesetzt werden.

In dem erfindungsgemäßen Verfahren werden als Oxidationsmittel (4) vorzugsweise Luft, Sauerstoff, Wasserstoffperoxid, organische Peroxide, Perborate oder Persulfate, organische oder anorganische Persäuren, Salze und Derivate der Persäuren, Chlor, Brom, Iod, unterhalogenige Säuren sowie deren Salze, z. B. in Form von Bleichlauge, halogenige Säuren sowie deren Salze, Halogensäuren sowie deren Salze, Fe(CN)₆³⁻, N-Chlorverbindungen eingesetzt. Oxidationsmittel können beispielsweise aber auch Metalloxide oder Anoden von Elektrolysezellen sein. Des weiteren kann das verwendete Oxidationsmittel auch in situ, z. B. elektrochemisch, durch Hydrolyse, wie beispielsweise durch Hydrolyse von N-Chlorverbindungen, oder durch Redoxreaktionen, wie beispielsweise bei Hypochlorit- oder Hypobromitlösungen durch Disproportionierung von Chlor bzw. Brom in alkalischer Lösung, oder wie beispielsweise bei der Redoxreaktion zwischen Hypochlorit und Bromid, die zur Bildung von Hypobromit führt, erzeugt werden.

Bei salzartigen Oxidationsmitteln sind als Gegenionen Natrium, Kalium, Calcium, Ammonium oder Tetraalkylammonium bevorzugt.

Die Oxidationsmittel (4) können einzeln oder im Gemisch, gegebenenfalls jeweils in Kombination mit Enzymen, eingesetzt werden, wobei im Sinne der Erfindung der Begriff Enzym auch enzymatisch aktive Proteine oder Peptide oder prosthetische Gruppen von Enzymen umfaßt.

Beispiele für Enzyme, welche im Sinne des erfindungsgemäßen Verfahrens verwendet werden können, sind detailliert beschrieben in US 6,169,213 B1 (Spalte 26, Zeile 29 bis Spalte 28, Zeile 6), wobei Oxidoreduktasen der Klassen 1.1.1 bis 1.97 gemäß Internationaler Enzym-Nomenklatur, Committee of the International Union of Biochemistry and Molecular Biology (Enzyme Nomenclature, Academic Press, Inc., 1992, S. 24-154) vorzugsweise eingesetzt werden.

Falls Enzyme eingesetzt werden, kommen bevorzugt Oxidoreduktasen der im folgenden genannten Klassen zum Einsatz:
Enzyme der Klasse 1.1.5 (Chinone als Akzeptor),
Enzyme der Klasse 1.1.3 (Sauerstoff als Akzeptor),
Enzyme der Klasse 1.2.3(Sauerstoff als Akzeptor),
Enzyme der Klasse 1.3.3 (Sauerstoff als Akzeptor),
Enzyme der Klasse 1.3.5 (Chinone als Akzeptor,
Enzyme der Klasse 1.4.3 (Sauerstoff als Akzeptor),
Enzyme der Klasse 1.5.3 (Sauerstoff als Akzeptor),
Enzyme der Klasse 1.5.5 (Chinone als Akzeptor),
Enzyme der Klasse 1.6.5 (Chinone als Akzeptor),
Enzyme der Klasse 1.7.3 (Sauerstoff als Akzeptor),
Enzyme der Klasse 1.8.3 (Sauerstoff als Akzeptor),
Enzyme der Klasse 1.8.5 (Chinone als Akzeptor),
Enzyme der Klasse 1.9.3 (Sauerstoff als Akzeptor),
Enzyme der Klasse 1.10.3 (Sauerstoff als Akzeptor),
Peroxidasen der Klasse 1.11.1,
   sowie Enzyme der Klassen 1.12, 1.13, 1.14, 1.15 und 1.16,
   wobei
Cellobiose: Quinone-1-oxidoreduktase (1.1.5.1),
Bilirubinoxidase (1.3.3.5),
Catechol Oxidase (Tyrosinase) (1.10.3.1),
L-Ascorbate Oxidase (1.10.3.3),
o-Aminophenol Oxidase (1.10.3.4)
Laccase (Benzoldiol: Oxigen Oxidoreduktase) (1.10.3.2)
Cytochrom-C-peroxidasen (1.11.1.5),
Catalase (1.11.1.6),
Peroxydase (1.11.1.7),
Iodid-Peroxidase (1.11.1.8),
Glutathione-Peroxidase (1.11.1.9),
Chlorid-Peroxidase (1.11.1.10),
L-Ascorbat-peroxidase (1.11.1.11),
Phospholipid-Hydroperoxid-Glutathione-Peroxidase (1.11.1.12),
Mangan-Peroxidase (1.11.1.13),
Diarylpropan-Peroxidase (Ligninase, Ligninperoxidase) (1.11.1.14),
Superoxid-Dismutase (1.15.1.1) und
Ferroxidase (1.16.3.1)
besonders bevorzugt sind.

Die genannten Enzyme sind käuflich erhältlich oder lassen sich nach Standardverfahren gewinnen. Als Organismen zur Produktion der Enzyme kommen beispielsweise Pflanzen, tierische Zellen, Bakterien und Pilze in Betracht. Grundsätzlich können sowohl natürlich vorkommende als auch gentechnisch veränderte Organismen Enzymproduzenten sein. Ebenso sind Teile von einzelligen oder mehrzelligen Organismen als Enzymproduzenten denkbar, vor allem Zellkulturen. Für die besonders bevorzugten Enzyme, wie die aus der Gruppe 1.11.1, vor allem aber 1.10.3, und insbesondere zur Produktion von Laccasen werden beispielsweise Weißfäulepilze wie Pleurotus, Phlebia und Trametes verwendet.

Die verwendeten Oxidationsmittel (4) werden vorzugsweise in Konzentrationen von 0,1 M bis zu ihrer jeweiligen Sättigungskonzentration eingesetzt

Handelt es sich bei dem im erfindungsgemäßen Verfahren eingesetzten Oxidationsmittel (4) um ein 2-Elektronen-Oxidationsmittel, so wird dieses vorzugsweise in einer Menge von 0,2 bis 250 Mol%, bevorzugt 100 bis 220 Mol%, besonders bevorzugt 150 bis 210 Mol%, jeweils bezogen auf die molare Menge der in den eingesetzten Organosiliciumverbindungen enthaltenen Carbinolgruppen, verwendet. Handelt es sich bei dem im erfindungsgemäßen Verfahren eingesetzten Oxidationsmittel dagegen um ein 1-Elektronen-Oxidationsmittel, so wird dieses vorzugsweise in einer Menge von 0,4 bis zu 500 Mol%, bevorzugt 200 bis 440 Mol%, besonders bevorzugt 300 bis 420 Mol%, jeweils bezogen auf die molare Menge der in den eingesetzten Organosiliciumverbindungen enthaltenen Carbinolgruppen, verwendet.

Falls bei dem erfindungsgemäßen Verfahren Metalloxide als Oxidationsmittel (4) eingesetzt werden, sind Bismut(III)oxid, Iridium(III)oxid, Cer(IV)oxid, Cobalt(II)oxid, Cobalt(III)oxid, Eisen(III)oxid, Mangan (IV) oxid, Zinn (IV) oxid, Niob(V)oxid, Antimon(V)oxid, Indium(III)oxid, Quecksilber(II)oxid, Blei(IV)oxid, Silber(I)oxid, Cu(II)oxid, Palladium(II)oxid, insbesondere Blei(IV)oxid, Mangan(IV)oxid, Silber(I)oxid, Cu(II)oxid und Palladium(II)oxid, bevorzugt.

Falls bei dem erfindungsgemäßen Verfahren die Oxidation mit Hilfe von Elektroden einer Elektrolysezelle erfolgt, so können die verwendeten Elektroden gleich oder verschieden sein und vorzugsweise aus Kohlenstoff, Eisen, Blei, Bleidioxid, Kupfer, Nickel, Zink, Cadmium, Quecksilber, Tantal, Titan, Silber, Platin, platiniertem Platin, Palladium, Rhodium, Gold oder aus Legierungen der genannten Verbindungen bestehen. Besonders bevorzugt sind Elektroden aus Edelstahl, Tantal, Titan, Rhodium, Platin oder Gold, insbesondere Elektroden aus Edelstahl, wobei Edelstähle der Gruppe 1.4xxx (nach DIN 17850) ganz besonders bevorzugt sind.

Die Elektroden können gegebenenfalls durch Bedampfen, Sputtern, Galvanisieren oder ähnliche Verfahren mit anderen Stoffen überzogen worden sein. Die Oberfläche der Elektroden kann durch geeignete Verfahren vergrößert worden sein, z. B. durch Schleifen, Polieren, Sandstrahlen, Ätzen oder Erodieren.

Ferner können bei dem erfindungsgemäßen Verfahren alle weiteren Stoffe (5) eingesetzt werden, die auch bisher in mediatorvermittelten Oxidationen eingesetzt worden sind. Mögliche Zusätze sind Halogene, z. B. Brom, oder Salze, z. B. Alkali-, Erdalkali- oder Ammoniumhalogenide oder -sulfate, - carbonate, -hydrogencarbonate, Phosphorsäure und deren Alkali-, Erdalkali- oder Ammoniumsalze oder Kohlendioxid. Diese Zusätze können dem Oxidationsmittel bzw. der das Oxidationsmittel enthaltenden Phase oder der zu oxidierenden Organosiliciumverbindung (1) bzw. der die zu oxidierende Organosiliciumverbindung (1) enthaltenden Phase, ggf. gelöst, zugesetzt werden, oder ggf. in gelöster Form als weitere Komponente dem Reaktionsgemisch zugeführt werden.

Wird bei dem erfindungsgemäßen Verfahren als Oxidationsmittel (4) beispielsweise Hypochlorit verwendet, ist z. B. der Zusatz von Brom oder Bromid, welche vorzugsweise in Mengen von 0,01 bis 100 Mol-%, bezogen auf die eingesetzte Menge Hypochlorit, bevorzugt in Mengen zwischen 1 und 50 Mol-%, zum Einsatz kommen, bevorzugt.

Ferner werden bei dem erfindungsgemäßen Verfahren der Reaktionsmischung Substanzen (6) zugesetzt, mit deren Hilfe sich der pH-Wert der Reaktionsmischung verändern oder konstant halten lässt. Beispiele für solche Stoffe (6) sind Puffer, wie z. B. Natriumhydrogencarbonat, Dinatriumhydrogenphosphat oder Natriumdihydrogenphosphat, oder Puffergemische, Säuren, wie z. B. Kohlendioxid, Phosphorsäure, Salzsäure oder Schwefelsäure, und Basen, wie z. B. (Erd)Alkalimetallhydroxide, -carbonate oder -phosphate wie NaOH, KOH, Na₂CO₃ oder Na₃PO₄.

Das erfindungsgemäße Verfahren kann mit oder ohne zusätzliche Lösungsmittel (7) als 1-Phasen- oder Mehrphasenreaktion oder in Dispersion, wie z. B. Micro- oder Macro-Emulsion, durchgeführt werden.

Falls bei dem erfindungsgemäßen Verfahren Lösungsmittel (7) eingesetzt wird, handelt es sich vorzugsweise um inerte, den Redoxprozess nicht beeinflussende Lösungsmittel. Beispiele für geeignete Lösungsmittel (7), die beim erfindungsgemäßen Verfahren einzeln oder im Gemisch miteinander eingesetzt werden können, sind Pentan, Petrolether, n-Hexan, Hexan-Isomerengemische, Cyclohexan, Heptan, Oktan, Waschbenzin, Dekalin, Benzol, Toluol, Xylol, Diethylether, Di-n-Propylether, Diisopropylether, Di-n-Butylether, Methyl-tert.-butylether, Ethylenglykoldimethylether, Ethylenglykoldiethylether, Diethylenglykoldimethylether, Tetrahydrofuran, Dioxan, Methylacetat, Ethylacetat, n-, sec. und tert.-Butylacetat, Dichlormethan, Trichlormethan, Tetrachlormethan, 1,2-Dichlorethan, Trichlorethylen, Tetrachlorethylen, Chlorbenzol, 1-Chlor-Naphthalin, Ethylencarbonat, Propylencarbonat, CO₂, Acetonitril, Acetamid, Tetrahydro-1,3-dimethyl-2(1H)-pyrimidinon (DMPU), Hexamethylphosphorsäuretriamid (HMPT), Dimethylsulfoxid (DMSO), Sulfolan, Aceton, Methylethylketon (MEK), Methylisobutylketon (MIBK), Diisopropylketon, ionische Flüssigkeiten, lineare und cyclische Siloxane sowie Mischungen der genannten Lösungsmittel.

Falls beim erfindungsgemäßen Verfahren zusätzliche Lösungsmittel (7) verwendet werden, handelt es sich um Mengen von bevorzugt 0,1 bis 200 Gewichtsteile, besonders bevorzugt 1 bis 100 Gewichtsteile, jeweils bezogen auf 100 Gewichtsteile des Gewichts der zu oxidierenden Organosiliciumverbindung (1).

Wird das erfindungsgemäße Verfahren als 2-Phasen-Reaktion durchgeführt, so ist eine möglichst gute Homogenisierung der nicht miteinander mischbaren Phasen und die Schaffung einer großen inneren Reaktionsfläche zu gewährleisten, wie z.B. durch Erzeugen einer durchschnittlichen Teilchengrößen von < 500 µm. Die intensive Durchmischung der Reaktionsphasen kann prinzipiell mit allen nach dem Stand der Technik bekannten Mischsystemen, wie z.B. Rührwerken aller Art, Hochgeschwindigkeitsrührwerken, wie z.B. solche erhältlich unter der Marke Ultra-Turrax^{®} oder ähnliches Dissolversystem, mittels Ultraschallsonden oder -bädern, elektrischen, magnetischen oder elektromagnetischen Feldern usw., oder - wie z.B. bei kontinuierlicher Reaktionsführung - mit statischen oder bewegten Mischelementen oder -düsen sowie durch turbulente Strömung, oder durch beliebige Kombinationen hiervon erfolgen.

Wird das erfindungsgemäße Verfahren in Dispersion durchgeführt, so können entsprechend Emulgatoren bzw. oberflächenaktive Mittel (8), wie etwa nichtionische, anionische, kationische oder amphotere Emulgatoren, vorhanden sein, wobei die Herstellung der Dispersion in beliebiger und dem Fachmann bekannter Art und Weise erfolgen kann. Als Emulgator bzw. oberflächenaktives Mittel können aber auch die zu oxidierende Organosiliciumverbindung (1) selbst oder das nach dem erfindungsgemäßen Verfahren erhaltene Reaktionsprodukt (2) verwendet werden.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bei dem erfindungsgemäßen Verfahren können die eingesetzten Komponenten auf an sich bekannte Art und Weise beliebig miteinander vermischt, der Reaktion zugeführt und/oder zur Reaktion gebracht werden. Das erfindungsgemäße Verfahren kann dabei absatzweise, halbkontinuierlich oder vollkontinuierlich in dafür geeigneten Reaktorsystemen, wie z. B. Batch-Reaktor, Batch-Reaktor-Kaskade, Loop-Reaktor, Strömungsrohr, Rohrreaktor, Microreaktor, Kreiselpumpen und beliebige Kombinationen hiervon, durchgeführt werden.

Bei stark exothermer Reaktion und/oder absatzweiser Reaktionsführung ist ein Zudosieren der Komponenten (4), ggf. im Gemisch mit Komponente (6), zu einem Gemisch bestehend aus den Komponenten (1), (3) und (6) sowie ggf. (5), (7) und/oder (8) bevorzugt. Bei kontinuierlicher Reaktionsführung erfolgt vorzugsweise eine Codosierung von 3 Volumenströmen, bestehend aus dem Volumenstrom A mit den Komponenten (1) und (3) sowie ggf. (7) und/oder (8), dem Volumenstrom B mit den Komponenten (5) und (6) und dem Volumenstrom C mit der Komponente (4) ggf. im Gemisch mit Komponente (6).

Das erfindungsgemäße Verfahren wird vorzugsweise unter ständiger Kontrolle des pH-Wertes bei einem pH-Wert von pH ≥ 3 und pH ≤ 12, bevorzugt pH ≥ 4, besonders bevorzugt pH ≥ 6, durchgeführt. Die Einstellung des pH-Wertes erfolgt dabei vorzugsweise während der Reaktion durch gleichzeitige Zugabe der Komponente (6). Falls gewünscht kann Komponente (6) auch bereits vor der Reaktion in ausreichender Menge zugegeben werden und dadurch der pH-Wert der Reaktionsmischung für die Dauer der Umsetzung konstant gehalten werden.

Ferner wird das erfindungsgemäße Verfahren bei einer Temperatur von vorzugsweise -100 bis +150 °C, bevorzugt -50 bis +100 °C, besonders bevorzugt -20 bis +75 °C, durchgeführt.

Die Reaktionszeiten betragen vorzugsweise 0,1 Sekunden bis 72 Std., bevorzugt 1 Sekunde bis 48 Std., insbesondere bevorzugt 1 Sekunde bis 24 Std.

Nach Beendigung der erfindungsgemäßen Umsetzung können die Reaktionsprodukte nach beliebigen und bisher bekannten Verfahrensschritten von gegebenenfalls eingesetzten Reaktionshilfsstoffen abgetrennt und isoliert werden. Vorzugsweise werden die Produkte durch Ansäuern der Reaktionsmischung auf pH-Werte ≤ 3 in Form ihrer freien Säuren isoliert. Als Säuren werden dabei vorzugsweise solche eingesetzt, deren pKₛ-Wert kleiner ist als der pKₛ-Wert der Carboxygruppe der erfindungsgemäßen Carboxyreste aufweisenden Organosiliciumverbindungen (2). Beispiele für solche Säuren sind Trifluoressigsäure, HCl, H₂SO₄, Methansulfonsäuren, Trifluormethansulfonsäuren und p-Toluolsulfonsäuren. Hierdurch erfolgt auch die Abtrennung der gebildeten freien, in organischem Medium löslichen Siloxancarbonsäuren von vorhandenen Salzen, z.B. anorganischen Salzen. Falls gewünscht können nach der Umsetzung auch leichtflüchtige Komponenten und ggf. verwendetes Lösungsmittel durch Destillation entfernt werden.

An das erfindungsgemäße Verfahren können sich darüber hinaus beliebige weitere Prozessschritte anschließen, mittels derer die gewünschten Eigenschaften der nach dem erfindungsgemäßen Verfahren erhaltenen Organosiliciumverbindung (2) gezielt eingestellt werden können. Die Durchführung der Prozessschritte orientiert sich dabei grundsätzlich am aktuellen Stand der Technik und erfolgt in der dem Fachmann bekannten Art und Weise.

Beispiele für solche Folgeumsetzungen sind insbesondere Equilibrierungsreaktionen mit z. B. Organopolysiloxanen, Kondensation der Organosiliciumverbindung (2) mit anderen zu Kondensationsreaktionen befähigten Organosiliciumverbindungen, wie z. B. Silanolen, Alkoxyfunktionellen Silanen und Silanol- oder Alkoxyfunktionellen Polysiloxanen bzw. Organosilicon-Harzen, sowie die organofunktionelle Modifizierung der Organosiliciumverbindung, wie z.B. Veresterung, Amid- oder Anhydridbildung.

Das erfindungsgemäße Verfahren bietet gegenüber dem Stand der Technik eine Reihe von Vorteilen. Es ist präparativ einfach, ohne speziellen apparativen Aufwand zu realisieren und durch die niedrige Reaktionstemperatur sowie den katalytischen Einsatz der verwendeten Mediatoren kostengünstig, Ressourcen schonend und damit nachhaltig umweltverträglich.

Das erfindungsgemäße Verfahren ist universell und flexibel einsetzbar. Es ist für eine diskontinuierliche und insbesondere eine kontinuierliche Prozessführung gleichermaßen geeignet, was einen weiteren Vorteil hinsichtlich Kosten, Flexibilität und Raum-Zeit-Ausbeute bedeutet.

Durch die selektive, rasche und nahezu quantitative Oxidation der Carbinolgruppen werden selbst bei polymeren Organosiliciumverbindungen hervorragende Reaktionsausbeuten in kurzen Reaktionszeiten erhalten. Die Reaktionsprodukte lassen sich sauber und auf einfache Art und Weise isolieren. Ferner werden bei der erfindungsgemäßen Umsetzung kaum Nebenprodukte gebildet. Außerdem erlauben die verhältnismäßig milden Reaktionsbedingungen die Anwendung des erfindungsgemäßen Verfahrens auch auf Organosiliciumverbindungen (1) mit empfindlichen funktionellen Gruppen.

Die nach dem erfindungsgemäßen Verfahren erhaltenen, Carboxyreste-aufweisenden Organosiliciumverbindungen (2) eignen sich aufgrund der Reaktionsfreudigkeit der Carboxygruppe gegenüber O-, N- und S-Nucleophilen beispielsweise hervorragend zur permanenten Ausrüstung entsprechender Materialien, wie z.B. von Naturfasern (Wolle, Seide, Baumwolle, Keratinfasern etc.), Cellulose und Cellulosefasern sowie deren Mischgewebe mit Kunstfasern wie Polypropylen-, Polyester- oder Polyamidfasern. Typische Ziel-Effekte sind ein weicher, fließender Griff, niedrige Vergilbungsneigung, verbesserte Elastizität, antistatische Eigenschaften, niedrige Reibwerte, Oberflächenglätte, Glanz, Knittererholung, Farbechtheiten, Waschbeständigkeit, Hydrophilie, Weiterreissfestigkeit, verringerte Pillingneigung, "Easy-Care" und "Soil-Release" Eigenschaften, verbesserter Tragekomfort, hohe Beständigkeit der Ausrüstung gegenüber Wasch- und Pflegeprozessen, verbesserte industrielle Verarbeitbarkeit, z.B. hinsichtlich Verarbeitungs- und Produktionsgeschwindigkeit.

Weiterhin eignen sich die Carboxyreste-aufweisenden Organosiliciumverbindungen (2) als Hilfsstoff bei der Ledergerbung und -zurichtung, sowie für die Leimung und Oberflächenveredelung von Papier. Auch können Carboxyreste-aufweisende Organosiliciumverbindungen als Additive in Beschichtungen und Lacken Einsatz finden, wo sie z. B. zur Verringerung der Oberflächenrauhigkeit und somit zu einer Verringerung des Gleitwiderstands des Lacks führen.

Andere Anwendungsmöglichkeiten sind die Verwendung als Zusatz in kosmetischen Formulierungen, beispielsweise in Hautpflegemitteln, als Konditionierer in Haarwaschmitteln oder als Feuchthaltemittel im allgemeinen.

Ferner finden Carboxyreste-aufweisende Silicone Anwendung in Bautenschutzmitteln, sowie - als Oberflächenaktive Substanzen - für die Herstellung wässriger Emulsionen.

Darüber hinaus können Carboxyreste-aufweisende Organosiliciumverbindungen auch als chemischer Baustein, wie z. B. für die Herstellung von Kunststoffen oder Harzen, sowie als Intermediat für weitere Synthesen eingesetzt werden.

Die folgenden Verfahrens-Beispiele erläutern die Erfindung. Alle Angaben von Teilen mit Prozentsätzen beziehen sich, falls nicht anders angegeben, auf das Gewicht. Des Weiteren beziehen sich alle Viskositätsangaben auf eine Temperatur von 25°C. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1: 3-[2-(2-Carboxyethyl)-1,1,2,2-tetramethyldisiloxanyl]propionsäure

20 g (80 mmol) 3-[2-(3-Hydroxypropyl)-1,1,2,2-tetramethyldisiloxanyl]propanol werden zusammen mit 758 mg (4,4 mmol) 4-Hydroxy-TEMPO in 40 ml Essigsäureethylester gelöst. 166 ml technische Bleichlauge werden mit 20 proz. Schwefelsäure auf einen pH-Wert von 9,5 eingestellt. Synchron werden diese Lösungen in ein auf 0°C gekühltes Reaktionsgefäß unter intensivem Rühren getropft. Der pH-Wert der Reaktionsmischung wird durch gleichzeitige Zugabe von 2N NaOH bei ca. 8 gehalten.

Man trennt die Phasen, wäscht die wässrige Phase mit 10 ml Essigester und säuert sie mit konz. HCl auf pH 1 an. Extraktion mit MTBE und Eindampfen liefert 19 g Feststoff, bei dem es sich um reine 3-[2-(2-Carboxyethyl)-1,1,2,2-tetramethyldisiloxanyl]propionsäure handelt.

### Beispiel 2: α,ω-(2-Carboxyethyl)-modifiziertes Polydimethylsiloxan

Die Umsetzung erfolgt analog zu Beispiel 1 unter Verwendung eines Polysiloxans bestehend aus Dimethylsiloxy- und (3-Hydroxyproypyl)dimethylsiloxyeinheiten mit einem Carbinolgruppengehalt von 3,19 Gew.-% und einer Viskosität von ca. 50 mPa·s (bei 25 °C). Die neutrale Reaktionsmischung wird nach Reaktionsende mit 10%iger HCl angesäuert, die Essigesterphase abgetrennt und eingedampft. Man erhält das α,ω-(2-Carboxyethyl)-modifiziertes Polydimethylsiloxan als fast farbloses, klares Öl mit einem Carboxygruppengehalt von 8,23 Gew.-%.

### Beispiel 3: α,ω-(2-Carboxyethyl)-modifiziertes Polydimethylsiloxan

Die Umsetzung erfolgt analog zu Beispiel 1 unter Verwendung eines Polysiloxans bestehend aus Dimethylsiloxy- und (3-Hydroxyproypyl)dimethylsiloxyeinheiten mit einem Carbinolgruppengehalt von 0,81 Gew.-% und einer Viskosität von ca. 110 mPa·s (bei 25 °C). Die neutrale Reaktionsmischung wird nach Reaktionsende mit 10%iger HCl angesäuert, die Essigesterphase abgetrennt und eingedampft. Man erhält das α,ω-(2-Carboxyethyl)-modifizierte Polydimethylsiloxan als fast farbloses, klares Öl mit einem Carboxygruppengehalt von 2,14 Gew.-%.

### Beispiel 4: seitenständig 2-Carboxyethyl-modifiziertes Polydimethylsiloxan

Die Umsetzung erfolgt analog zu Beispiel 1 unter Verwendung eines Polysiloxans bestehend aus Trimethylsiloxy-, Dimethylsiloxy- und (3-Hydroxyproypyl)methylsiloxyeinheiten mit einem Carbinolgruppengehalt von 4,4 Gew.-% und einer Viskosität von ca. 350 mPa·s (bei 25 °C). Die neutrale Reaktionsmischung wird nach Reaktionsende mit 10%iger HCl angesäuert, die Essigesterphase abgetrennt und eingedampft. Man erhält das α,ω-(2-Carboxyethyl)-modifizierte Polydimethylsiloxan als leicht gelbliches, klares Öl mit einem Carboxygruppengehalt von 11,6 Gew.-%.

### Beispiel 5: seitenständig 2-Carboxyethyl-modifiziertes Polydimethylsiloxan

Die Umsetzung erfolgt analog zu Beispiel 1 unter Verwendung eines Polysiloxans bestehend aus Trimethylsiloxy-, Dimethylsiloxy- und (3-Hydroxyproypyl)methylsiloxyeinheiten mit einem Carbinolgruppengehalt von 1,08 Gew.-% und einer Viskosität von ca. 550 mPa·s (bei 25 °C). Die neutrale Reaktionsmischung wird nach Reaktionsende mit 10%iger HCl angesäuert, die Essigesterphase abgetrennt und eingedampft. Man erhält das α,ω-(2-Carboxyethyl)-modifizierte Polydimethylsiloxan als schwach gelbes, klares Öl mit einem Carboxygruppengehalt von 2,85 Gew.-%.

### Beispiel 6: seitenständig 2-Carboxyethyl-modifiziertes Polydimethylsiloxan

Die Umsetzung erfolgt analog zu Beispiel 1 unter Verwendung eines Polysiloxans bestehend aus Trimethylsiloxy-, Dimethylsiloxy- und (3-Hydroxyproypyl)methylsiloxyeinheiten mit einem Carbinolgruppengehalt von 0,76 Gew.-% und einer Viskosität von ca. 260 mPa·s (bei 25 °C). Die neutrale Reaktionsmischung wird nach Reaktionsende mit 10%iger HCl angesäuert, die Essigesterphase abgetrennt und eingedampft. Man erhält das α,ω-(2-Carboxyethyl)-modifizierte Polydimethylsiloxan als fast farbloses, klares Öl mit einem Carboxygruppengehalt von 2,02 Gew.-%.

### Beispiel 7: seitenständig 2-Carboxyethyl-modifiziertes Polydimethylsiloxan

Die Umsetzung erfolgt analog zu Beispiel 1 unter Verwendung eines Polysiloxans bestehend aus Trimethylsiloxy-, Dimethylsiloxy- und (3-Hydroxyproypyl)methylsiloxyeinheiten mit einem Carbinolgruppengehalt von 0,37 Gew.-% und einer Viskosität von ca. 650 mPa·s (bei 25 °C). Die neutrale Reaktionsmischung wird nach Reaktionsende mit 10%iger HCl angesäuert, die Essigesterphase abgetrennt und eingedampft. Man erhält das α,ω-(2-Carboxyethyl)-modifizierte Polydimethylsiloxan als nahezu farbloses klares Öl mit einem Carboxygruppengehalt von 0,98 Gew.-%.

## Patentansprüche

1. Verfahren zur Herstellung von Carboxyreste-aufweisenden Organosiliciumverbindungen (2) enthaltend Einheiten der Formel
AₐR_{b}X_{c}H_{d}SiO_{(4-a-b-c-d)/2} (III),
wobei A gleich oder verschieden sein kann und einen Rest der Formel 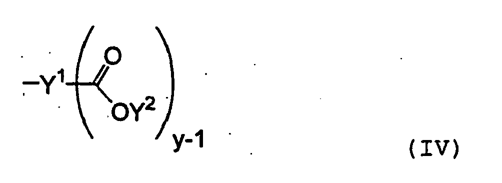 bedeutet;
durch Oxidation von Carbinolreste-aufweisenden Organosiliciumverbindungen (1) enthaltend Einheiten der Formel
A'ₐR_{b}X_{c}H_{d}SiO_{(4-a-b-c-d)/2} (I),
wobei A' gleich oder verschieden sein kann und einen Rest der Formel 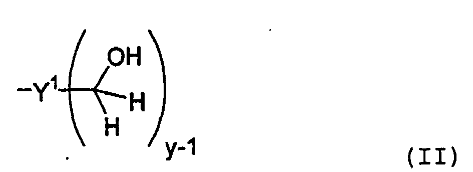 bedeutet,
wobei Y¹ einen zwei- oder mehrwertigen, linearen oder cyclischen, verzweigten oder unverzweigten organischen Rest bedeutet, der gegebenenfalls substituiert und/oder durch die Atome N, O, P, B, Si und S unterbrochen sein kann,
Y² ein Wasserstoffatom, ein organisches oder anorganisches Kation, oder einen einwertigen gegebenenfalls substituierten Kohlenwasserstoffrest, der durch Heteroatome unterbrochen sein kann,
y entsprechend der Wertigkeit von Rest Y¹ ≥ 2 ist,
R gleich oder verschieden sein kann und einen einwertigen, SiC-gebundenen gegebenenfalls substituierten Kohlenwasserstoffrest bedeutet,
X gleich oder verschieden sein kann und Chloratom, die Gruppe A' oder einen Rest der Formel -OR¹, mit R¹ gleich Wasserstoffatom oder einwertiger gegebenenfalls substituierter Kohlenwasserstoffrest, der durch Heteroatome unterbrochen sein kann, bedeutet,
a 0, 1 oder 2 ist,
b 0, 1, 2 oder 3 ist,
c 0, 1, 2 oder 3 ist, und
d 0, 1, 2 oder 3 ist,
mit der Maßgabe, dass die Summe a+b+c+d ≤ 4 ist und die Organosiliciumverbindung der Formel (I) pro Molekül mindestens einen Rest A' aufweist die Organosiliciumverbindung der Formel (III) pro Molekül mindestens einen Rest A aufweist,
mit Hilfe eines Mediators (3) ausgewählt aus der Gruppe der aliphatischen, cycloaliphatischen, heterocyclischen und aromatischen NO-, NOH- und 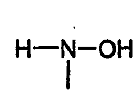 -haltigen Verbindungen - und eines Oxidationsmittels (4),
mit der Maßgabe, dass die Reaktion unter ständiger Kontrolle des pH-Wertes bei einem pH ≥ 3 durchgeführt wird.

2. Verfahren nach Anspruch 1, **dadurch gekennzeichnet, dass** die Reaktionsmischung nach Beendigung der Umsetzung auf einen pH-Wert ≤ 3 angesäuert wird mit Säuren, deren pkₛ-Wert kleiner als der pkₛ-Wert der Carboxygruppe in den Carboxyreste aufweisenden Organosiliciumverbindungen (2) ist, und die Carboxyreste aufweisenden Organosiliciumverbindungen (2) in Form ihrer freien Säuren erhalten werden.

3. Verfahren nach Anspruch 1 oder 2, **dadurch gekennzeichnet, dass** als Carbinolreste-aufweisende Organosiliciumverbindungen (1) solche der Formel
A'ᵥR_{w}X_{(3-v-w)}Si (I'),
wobei A', X und R die in Anspruch 1 dafür angegebene Bedeutung haben,
v 0, 1, 2 oder 3, bevorzugt 0 oder 1, ist
w 0, 1, 2 oder 3 ist,
mit der Maßgabe, dass sie pro Molekül mindestens einen Rest A' enthalten,
eingesetzt werden.

4. Verfahren nach Anspruch 1 oder 2, **dadurch gekennzeichnet, dass** als Carbinolrest-aufweisende Organosiliciumverbindungen (1) solche der Formel
A'ᵥR₃₋ᵥSiO(SiR₂O)ₙ(SiRA'O)ₒSiR₃₋ᵥA'ᵥ (I"),
wobei A`und R die in Anspruch 1 dafür angegebene Bedeutung haben,
v 0, 1, 2 oder 3, bevorzugt 0 oder 1, ist
n 0 oder eine ganze Zahl von 1 bis 2000 ist,
o 0 oder eine ganze Zahl von 1 bis 2000, bevorzugt 0 bis 500, ist,
mit der Maßgabe, dass sie pro Molekül mindestens einen Rest A' enthalten,
eingesetzt werden.

5. Verfahren nach Anspruch 1 oder 2, **dadurch gekennzeichnet, dass** als Carbinolreste-aufweisende Organosiliciumverbindungen (1) solche der Formel
[A'ᵥR₃₋ᵥSiO_{1/2}]ₛ[SiO_{4/2}] (I"'),
wobei A' und R die in Anspruch 1 dafür angegeben Bedeutung haben,
v 0, 1, 2 oder 3, bevorzugt 0 oder 1, ist,
s einen Wert von einschließlich 0,2 bis 6, bevorzugt 0,4 bis 4, annehmen kann und die Anzahl M-Einheiten [A'ᵥR₃₋ᵥSiO_{1/2}] pro Q-Einheit [SiO_{4/2}] beschreibt,
mit der Maßgabe, dass sie pro Molekül mindestens einen Rest A' enthalten,
eingesetzt werden.

6. Verfahren nach Anspruch 1 oder 2, **dadurch gekennzeichnet, dass** als Carboxylreste-aufweisende Organosiliciumverbindungen (2) solche der Formel
AᵥR_{w}X_{(3-v-w)}Si (III'),
wobei A, X und R die in Anspruch 1 dafür angegebene Bedeutung haben,
v 0, 1, 2 oder 3, bevorzugt 0 oder 1, ist
w 0, 1, 2 oder 3 ist,
mit der Maßgabe, dass sie pro Molekül mindestens einen Rest A enthalten,
erhalten werden.

7. Verfahren nach Anspruch 1 oder 2 ,**dadurch gekennzeichnet, dass** als Carboxylreste-aufweisende Organosiliciumverbindungen (2) solche der Formel
AᵥR₃₋ᵥSiO(SiR₂O)ₙ(SiRAO)ₒSiR₃₋ᵥAᵥ (III''),
wobei A und R die in Anspruch 1 dafür angegebene Bedeutung haben,
v 0, 1, 2 oder 3, bevorzugt 0 oder 1, ist
n 0 oder eine ganze Zahl von 1 bis 2000 ist,
o 0 oder eine ganze Zahl von 1 bis 2000, bevorzugt 0 bis 500, ist,
mit der Maßgabe, dass sie pro Molekül mindestens einen Rest A enthalten,
erhalten werden.

8. Verfahren nach Anspruch 1 oder 2, **dadurch gekennzeichnet, dass** als Carboxylreste-aüfweisende Organosiliciumverbindungen (2) solche der Formel
[AᵥR₃₋ᵥSiO_{1/2}]ₛ[SiO_{4/2}] (III"'),
wobei A und R' die in Anspruch 1 dafür angegebene Bedeutung haben,
v 0, 1, 2 oder 3, bevorzugt 0 oder 1, ist,
s einen Wert von einschließlich 0,2 bis 6, bevorzugt 0,4 bis 4, annehmen kann und die Anzahl M-Einheiten [AᵥR₃₋ᵥSiO_{1/2}] pro Q-Einheit [SiO_{4/2}] beschreibt,
mit der Maßgabe, dass sie pro Molekül mindestens einen Rest A enthalten,
erhalten werden.

9. Verfahren nach einem der Ansprüche 1 bis 8, **dadurch gekennzeichnet, dass** als Mediator (3) Nitroxyl-Radikale der Formel 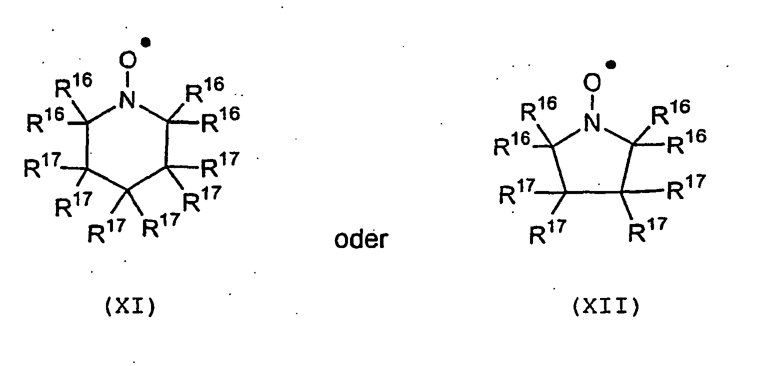 wobei
R¹⁶ gleich oder verschieden ist und Phenyl-, Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Rest bedeutet, wobei die Phenylreste unsubstituiert oder ein- oder mehrfach mit einem Rest R¹⁸ substituiert sein können, und die Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Reste gesättigt oder ungesättigt, verzweigt oder unverzweigt sein können und mit einem Rest R¹⁸ ein- oder mehrfach substituiert sein können, wobei R¹⁸ ein- oder mehrfach vorhanden sein kann und gleich oder verschieden ist und Hydroxy-, Formyl-, Carboxyrest, Ester oder Salz des Carboxyrests, Carbamoyl-, Sulfono-, Sulfamoyl-, Nitro-, Nitroso-, Amino, Phenyl-, Benzoyl-, C₁-C₅-Alkyl-, C₁-C₅-Alkoxyrest, C₁-C₅-Alkylcarbonyl-Rest bedeutet,
R¹⁷ gleich oder verschieden ist und ein Wasserstoffatom oder Hydroxy-, Mercapto-, Formyl-, Cyano-, Carbamoyl-, Carboxyrest, Ester oder Salz des Carboxyrests, Sulfonorest, Ester oder Salz des Sulfonorests, Sulfamoyl-, Nitro-, Nitroso-, Amino-, Phenyl-, Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Rest, Phospho-, Phosphono-, Phosphonooxyrest, Ester oder Salz des Phosphonooxyrests bedeutet, wobei
die Carbamoyl-, Sulfamoyl-, Amino-, Mercapto- und Phenylreste unsubstituiert oder ein- oder mehrfach mit einem Rest R¹² substituiert sein können,
und die Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Reste gesättigt oder ungesättigt, verzweigt oder unverzweigt sein können und mit einem Rest R¹² ein- oder mehrfach substituiert sein können, und eine [-CR¹⁷R¹⁷-]-Gruppe durch Sauerstoff, einen ggf. mit C₁-C₅-Alkylsubstituierten Iminorest, einen (Hydroxy)iminorest, eine Carbonylfunktion oder eine ggf. mit R¹² mono- oder disubstituierten Vinylidenfunktion ersetzt sein kann,
und zwei benachbarte Gruppen [-CR¹⁷R¹⁷-] durch eine Gruppe [-CR¹⁷=CR¹⁷-], [-CR¹⁷=N-] oder [-CR¹⁷=N(O)-] ersetzt sein können,
wobei R¹² ein- oder mehrfach vorhanden sein kann und gleich oder verschieden ist und Hydroxy-, Fomyl-, Cyano-, Carboxyrest, Ester oder Salz des Carboxyrests, Carbamoyl-, Sulfono-, Sulfamoyl-, Nitro-, Nitroso-, Amino-, Phenyl-, C₁-C₅-Alkyl-, C₁-C₅-Alkoxy-, C₁-C₅-Alkylcarbonylrest bedeutet, eingesetzt werden.

10. Verfahren nach Anspruch 9, **dadurch gekennzeichnet, dass** die Nitroxyl-Radikale der Formeln (XI) und (XII) über einen oder mehrere Reste R¹⁷ mit einer polymeren Struktur verknüpft sind.

11. Verfahren nach Anspruch 9 oder 10, **dadurch gekennzeichnet, dass** als Mediator (3) solche ausgewählt aus der Gruppe von 2,2,6,6-Tetramethyl-piperidin-1-oxyl (TEMPO), 4-Hydroxy-2,2,6,6-tetramethyl-piperidin-1-oxyl, 4-Acetamido-2,2,6,6-tetramethyl-piperidin-1-oxyl, 4-Acetoxy-2,2,6,6-tetramethyl-piperidin-1-oxyl, 4-Benzoyloxy-2,2,6,6-tetramethyl-piperidin-1-oxyl und PIPO (polymer immobilised piperidinyloxyl) eingesetzt werden.

12. Verfahren nach einem der Ansprüche 1 bis 11, **dadurch gekennzeichnet, dass** der Mediator (3) in Mengen von 0,01 bis 100 Mol %, bezogen auf die Menge der in der eingesetzten Organosiliciumverbindung enthaltenen Carbinolgruppen, verwendet wird.

13. Verfahren nach einem der Ansprüche 1 bis 12, **dadurch gekennzeichnet, dass** als Oxidationsmittel (4) solche eingesetzt werden ausgewählt aus der Gruppe von Luft, Sauerstoff, Wasserstoffperoxid, organische Peroxide, Perborate und Persulfate, organische und anorganische Persäuren, Salze und Derivate der Persäuren, Chlor, Brom, Iod, unterhalogenige Säuren sowie deren Salze, z. B. in Form von Bleichlauge, halogenige Säuren sowie deren Salze, Halogensäuren sowie deren Salze, Fe(CN)₆³⁻ und N-Chlorverbindungen,
wobei sie gegebenenfalls jeweils in Kombination mit Enzymen eingesetzt werden können.

14. Verfahren nach einem der Ansprüche 1 bis 13, **dadurch gekennzeichnet, dass** das Oxidationsmittel (4), für den Fall dass es sich um ein 2-Elektronen-Oxidationsmittel handelt, in Mengen von 0,2 bis 250 Mol%, bzw. für den Fall, dass es sich um ein 1-Elektronen-Oxidationsmittel handelt, in Mengen von 0,4 bis 500 Mol%, jeweils bezogen auf die molare Menge der in den eingesetzten Organosiliciumverbindungen enthaltenen Carbinolgruppen, verwendet wird.

15. Verfahren nach einem der Ansprüche 1 bis 12, **dadurch gekennzeichnet, dass** als Oxidationsmittel (4) Metalloxide oder Anoden von Elektrolysezellen eingesetzt werden.

16. Verfahren nach einem der Ansprüche 1 bis 15, **dadurch gekennzeichnet, dass** es kontinuierlich durchgeführt wird.

## Claims

1. Method of preparing organosilicon compounds (2) comprising carboxy radicals and units of the formula
AₐR_{b}X_{c}H_{d}SiO_{(4-a-b-c-d)/2} (III),
where A may be identical or different and is a radical of the formula 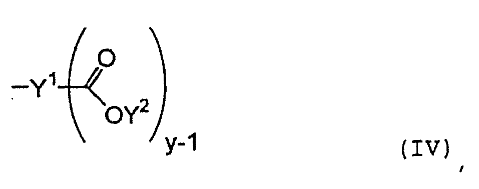 by oxidation of organosilicon compounds (1) comprising carbinol radicals and units of the formula
A'ₐR_{b}X_{c}H_{d}SiO_{(4-a-b-c-d)/2} (I),
where A' may be identical or different and is a radical of the formula 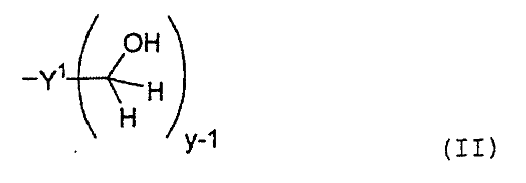 where Y¹ is a di- or polyvalent, linear or cyclic, branched or unbranched organic radical which may be optionally substituted and/or interrupted by the atoms N, O, P, B, Si and S,
Y² is a hydrogen atom, an organic or inorganic cation, or a monovalent optionally substituted hydrocarbon radical which may be interrupted by heteroatoms,
y corresponds to the valency of radical Y¹ and is ≥ 2,
R may be identical or different and is a monovalent, SiC-bonded optionally substituted hydrocarbon radical,
X may be identical or different and is chlorine atom, the group A' or a radical of the formula -OR¹, where R¹ is a hydrogen atom or monovalent optionally substituted hydrocarbon radical which may be interrupted by heteroatoms,
a is 0, 1 or 2,
b is 0, 1, 2 or 3,
c is 0, 1, 2 or 3, and
d is 0, 1, 2 or 3,
with the proviso that the sum a+b+c+d is ≤ 4 and the organosilicon compound of the formula (I) has at least one radical A' per molecule the organosilicon compound of the formula (III) has at least one radical A per molecule,
with the help of a mediator (3) chosen from the group of aliphatic, cycloaliphatic, heterocyclic and aromatic NO-, NOH- and 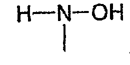 -containing compounds and an oxidizing agent (4),
with the proviso that the reaction is carried out with constant control of the pH at a pH of ≥ 3.

2. Method according to Claim 1, **characterized in that**, when the reaction is complete, the reaction mixture is acidified to a pH of ≤ 3 using acids whose pKₐ value is less than the pKₐ value of the carboxy group in the organosilicon compounds (2) comprising carboxy radicals, and the organosilicon compounds (2) comprising carboxy radicals are obtained in the form of their free acids.

3. Method according to Claim 1 or 2, **characterized in that** the organosilicon compounds (1) comprising carbinol radicals used are those of the formula
A'ᵥR_{w}X_{(3-v-w)}Si (I'),
where A', X and R have the meanings given for them in Claim 1,
v is 0, 1, 2 or 3, preferably 0 or 1,
w is 0, 1, 2 or 3,
with the proviso that they comprise at least one radical A' per molecule.

4. Method according to Claim 1 or 2, **characterized in that** the organosilicon compounds (1) comprising carbinol radicals used are those of the formula
A'ᵥR₃₋ᵥSiO(SiR₂O)ₙ(SiRA'O)ₒSiR₃₋ᵥA'ᵥ (I"),
where A' and R have the meanings given for them in Claim 1,
v is 0, 1, 2 or 3, preferably 0 or 1,
n is 0 or an integer from 1 to 2000,
o is 0 or an integer from 1 to 2000, preferably 0 to 500,
with the proviso that they comprise at least one radical A' per molecule.

5. Method according to Claim 1 or 2, **characterized in that** the organosilicon compounds (1) comprising carbinol radicals used are those of the formula [A'ᵥR₃₋ᵥSiO_{1/2}]ₛ [SiO_{4/2}] (I'''),
where A' and R have the meanings given for them in Claim 1,
v is 0, 1, 2 or 3, preferably 0 or 1,
s can assume a value of from 0.2 to 6, preferably 0.4 to 4, inclusive and describes the number of M units [A'ᵥR₃₋ᵥSiO_{1/2}] per Q unit [SiO_{4/2}],
with the proviso that they comprise at least one radical A' per molecule.

6. Method according to Claim 1 or 2, **characterized in that** the organosilicon compounds (2) comprising carboxyl radicals obtained are those of the formula
AᵥR_{w}X_{(3-v-w)}Si (III'),
where A, X and R have the meanings given for them in Claim 1,
v is 0, 1, 2 or 3, preferably 0 or 1,
w is 0, 1, 2 or 3,
with the proviso that they comprise at least one radical A per molecule.

7. Method according to Claim 1 or 2, **characterized in that** the organosilicon compounds (2) comprising carboxyl radicals obtained are those of the formula
AᵥR₃₋ᵥSiO(SiR₂O)ₙ(SiRAO)ₒSiR₃₋ᵥAᵥ (III''),
where A and R have the meanings given for them in Claim 1,
v is 0, 1, 2 or 3, preferably 0 or 1,
n is 0 or an integer from 1 to 2000,
o is 0 or an integer from 1 to 2000, preferably 0 to 500,
with the proviso that they comprise at least one radical A per molecule.

8. Method according to claim 1 or 2, **characterized in that** the organosilicon compounds (2) comprising carboxyl radicals obtained are those of the formula
[AᵥR₃₋ᵥSiO_{1/2}]ₛ[SiO_{4/2}] (III"'),
where A and R have the meanings given for them in Claim 1,
v is 0, 1, 2 or 3, preferably 0 or 1,
s can assume a value of from 0.2 to 6, preferably 0.4 to 4, inclusive and describes the number of M units [AᵥR₃₋ᵥSiO_{½}] per Q unit [SiO_{4/2}],
with the proviso that they comprise at least one radical A per molecule.

9. Method according to one of Claims 1 to 8, **characterized in that** the mediator (3) used is nitroxyl radicals of the formula 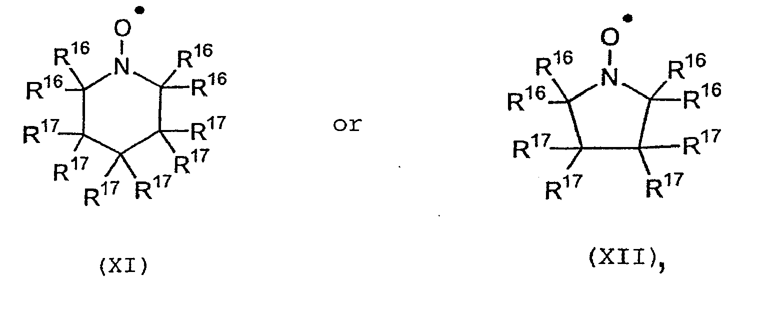 where
R¹⁶ is identical or different and is phenyl, aryl-C₁-C₅-alkyl, C₁-C₁₂-alkyl, C₁-C₅-alkoxy, C₁-C₁₀-carbonyl and carbonyl-C₁-C₆-alkyl radical, where the phenyl radicals may be unsubstituted or mono- or polysubstituted by a radical R¹⁸, and the aryl-C₁-C₅-alkyl, C₁-C₁₂-alkyl, C₁-C₅-alkoxy, C₁-C₁₀-carbonyl and carbonyl-C₁-C₆-alkyl radicals may be saturated or unsaturated, branched or unbranched and may be mono- or polysubstituted by a radical R¹⁸, where
R¹⁸ may be present one or more times and is identical or different and is hydroxy, formyl, carboxy radical, ester or salt of the carboxy radical, carbamoyl, sulfono, sulfamoyl, nitro, nitroso, amino, phenyl, benzoyl, C₁-C₅-alkyl, C₁-C₅-alkoxy radical, C₁-C₅-alkylcarbonyl radical, R¹⁷ is identical or different and is a hydrogen atom or hydroxy, mercapto, formyl, cyano, carbamoyl, carboxy radical, ester or salt of the carboxy radical, sulfono radical, ester or salt of the sulfono radical, sulfamoyl, nitro, nitroso, amino, phenyl, aryl-C₁-C₅-alkyl, C₁-C₁₂-alkyl, C₁-C₅-alkoxy, C₁-C₁₀-carbonyl and carbonyl-C₁-C₆-alkyl radical, phospho, phosphono, phosphonooxy radical, ester or salt of the phosphonooxy radical, where the carbamoyl, sulfamoyl, amino, mercapto and phenyl radicals may be unsubstituted or mono- or polysubstituted by a radical R¹²,
and the aryl-C₁-C₅-alkyl, C₁-C₁₂-alkyl, C₁-C₅-alkoxy, C₁-C₁₀-carbonyl and carbonyl-C₁-C₆-alkyl radicals may be saturated or unsaturated, branched or unbranched and may be mono- or polysubstituted by a radical R¹², and a [-CR¹⁷R¹⁷-] group may be replaced by oxygen, an optionally C₁-C₅-alkylsubstituted imino radical, a (hydroxy)imino radical, a carbonyl function or a vinylidene function optionally mono- or disubstituted by R¹², and two adjacent groups [- CR¹⁷R¹⁷ -] may be replaced by a group [-CR¹⁷=CR¹⁷-], [-CR¹⁷=N-] or [-CR¹⁷=N(O)-],
where R¹² may be present one or more times and is identical or different and is hydroxy, formyl, cyano, carboxy radical, ester or salt of the carboxy radical, carbamoyl, sulfono, sulfamoyl, nitro, nitroso, amino, phenyl, C₁-C₅-alkyl, C₁-C₅-alkoxy, C₁-C₅-alkylcarbonyl radical.

10. Method according to Claim 9, **characterized in that** the nitroxyl radicals of the formulae (XI) and (XII) are linked to a polymeric structure via one or more radicals R¹⁷

11. Method according to Claim 9 or 10, **characterized in that** the mediator (3) used is chosen from the group of 2,2,6,6-tetramethylpiperidin-1-oxyl (TEMPO), 4-hydroxy-2,2,6,6-tetramethylpiperidin-1-oxyl, 4-acetamido-2,2,6,6-tetramethylpiperidin-1-oxyl, 4-acetoxy-2,2,6,6-tetramethylpiperidin-1-oxyl, 4-benzoyloxy-2,2,6,6-tetramethylpiperidin-1-oxyl and PIPO (polymer immobilized piperidinyloxyl).

12. Method according to one of Claims 1 to 11, **characterized in that** the mediator (3) is used in amounts of from 0.01 to 100 mol%, based on the amount of carbinol groups present in the organosilicon compound used.

13. Method according to one of Claims 1 to 12, **characterized in that** the oxidizing agents (4) used are chosen from the group of air, oxygen, hydrogen peroxide, organic peroxides, perborates and persulfates, organic and inorganic peracids, salts and derivatives of the peracids, chlorine, bromine, iodine, hypohalic acids and salts thereof, e.g. in the form of bleaching liquor, halic acids and salts thereof, halogen acids and salts thereof, Fe (CN)₆³⁻ and N-chloro compounds, where, if appropriate, they can in each case be used in combination with enzymes.

14. Method according to one of Claims 1 to 13, **characterized in that** the oxidizing agent (4), if it is a 2-electron oxidizing agent, is used in amounts of from 0.2 to 250 mol%, or if it is a 1-electron oxidizing agent, in amounts of from 0.4 to 500 mol%, in each case based on the molar amount of the carbinol groups present in the organosilicon compounds used.

15. Method according to one of Claims 1 to 12, **characterized in that** the oxidizing agents (4) used are metal oxides or anodes of electrolysis cells.

16. Method according to one of Claims 1 to 15, **characterized in that** it is carried out continuously.

## Revendications

1. Procédé pour la préparation de composés organosiliciés (2) comportant des radicaux carboxy, qui contiennent des unités de formule
AₐR_{b}X_{c}H_{d}SiO_{(4-a-b-c-d)/2} (III),
A pouvant être identiques ou différents et représentant un radical de formule 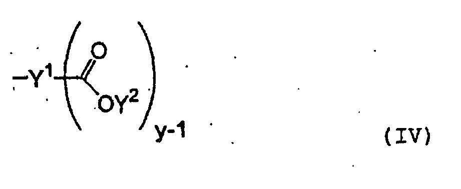 par oxydation de composés organosiliciés (1) comportant des radicaux carbinol, qui contiennent des unités de formule
A'ₐR_{b}X_{c}H_{d}SiO_{(4-b-c-d)/2} (I),
A' pouvant être identiques ou différents et représentant un radical de formule 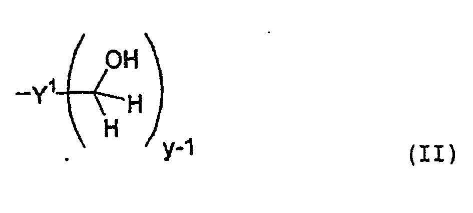 Y¹ représentant un radical organique di- ou plurivalent, linéaire ou cyclique, ramifié ou non ramifié, qui peut éventuellement être substitué et/ou interrompu par les atomes N, O, P, B, Si et S,
Y² représentant un atome d'hydrogène, un cation organique ou inorganique, ou un radical hydrocarboné monovalent éventuellement substitué qui peut être interrompu par des hétéroatomes, y en fonction de la valence du radical Y¹ étant ≥ 2,
R pouvant être identiques ou différents et représentant un radical hydrocarboné monovalent lié à SiC, éventuellement substitué,
X pouvant être identiques ou différents et représentant un atome de chlore, le groupe A' ou un radical de formule -OR¹, où R¹ représente un atome d'hydrogène ou un radical hydrocarboné monovalent éventuellement substitué qui peut être interrompu par des hétéroatomes,
a étant 0, 1 ou 2,
b étant 0, 1, 2 ou 3,
c étant 0, 1, 2 ou 3, et
d étant 0, 1, 2 ou 3,
étant entendu que la somme a+b+c+d est ≤ 4 et le composé organosilicié de formule (I) comporte au moins un radical A' par molécule, le composé organosilicié de formule (III) comporte au moins un radical A par molécule,
à l'aide d'un médiateur (3) choisi dans le groupe des composés aliphatiques, cycloaliphatiques, hétérocycliques et aromatiques contenant NO-, NOH- et 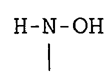 et d'un oxydant (4),
étant entendu que la réaction est effectuée avec régulation constante du pH à un pH ≥ 3.

2. Procédé selon la revendication 1, **caractérisé en ce que** le mélange réactionnel, une fois la réaction terminée, est acidifié à un pH ≤ 3 à l'aide d'acides dont le pKₐ est inférieur au pKₐ du groupe carboxy dans les composés organosiliciés (2) comportant des groupes carboxy, et les composés organosiliciés (2) comportant des groupes carboxy sont obtenus sous forme de leurs acides libres.

3. Procédé selon la revendication 1 ou 2, **caractérisé en ce qu'**on utilise comme composés organosiliciés (1) comportant des radicaux carbinol ceux de formule
A'ᵥR_{w}X_{(3-v-w)}Si (I')
dans laquelle A', X et R ont les significations indiquées pour ces radicaux dans la revendication 1,
v est 0, 1, 2 ou 3, de préférence 0 ou 1,
w est 0, 1, 2 ou 3,
étant entendu qu'ils contiennent au moins un radical A' par molécule.

4. Procédé selon la revendication 1 ou 2, **caractérisé en ce qu'**on utilise comme composés organosiliciés (1) comportant des radicaux carbinol ceux de formule
A'ᵥR₃₋ᵥSiO(SiR₂O)ₙ(SiRA'O)ₒSiR₃₋ᵥA'ᵥ (I'')
dans laquelle A' et R ont les significations indiquées pour ces radicaux dans la revendication 1,
v est 0, 1, 2 ou 3, de préférence 0 ou 1,
n est 0 ou un nombre entier allant de 1 à 2 000,
o est 0 ou un nombre entier allant de 1 à 2 000, de préférence de 0 à 500,
étant entendu qu'ils contiennent au moins un radical A' par molécule.

5. Procédé selon la revendication 1 ou 2, **caractérisé en ce qu'**on utilise comme composés organosiliciés (1) comportant des radicaux carbinol ceux de formule
[A'ᵥR₃₋ᵥSiO_{1/2}]ₛ [SiO_{4/2}] (I''')
dans laquelle A' et R ont les significations indiquées pour ces radicaux dans la revendication 1,
v est 0, 1, 2 ou 3, de préférence 0 ou 1,
s peut avoir une valeur allant de 0,2 à 6, de préférence de 0,4 à 4, et qui décrit le nombre des unités M [A'ᵥR₃₋ᵥSiO_{1/2}] par unité Q [SiO_{4/2}],
étant entendu qu'ils contiennent au moins un radical A' par molécule.

6. Procédé selon la revendication 1 ou 2, **caractérisé en ce qu'**on utilise comme composés organosiliciés (2) comportant des radicaux carboxy ceux de formule
AᵥR_{w}X(_{3-v-w})Si (III')
dans laquelle A, X et R ont les significations indiquées pour ces radicaux dans la revendication 1,
v est 0, 1, 2 ou 3, de préférence 0 ou 1,
w est 0, 1, 2 ou 3,
étant entendu qu'ils contiennent au moins un radical A par molécule.

7. Procédé selon la revendication 1 ou 2, **caractérisé en ce qu'**on utilise comme composés organosiliciés (2) comportant des radicaux carboxy ceux de formule
AᵥR₃₋ᵥSiO(SiR₂O)ₙ(SiRAO)ₒSiR₃₋ᵥAᵥ (III'')
dans laquelle A et R ont les significations indiquées pour ces radicaux dans la revendication 1,
v est 0, 1, 2 ou 3, de préférence 0 ou 1,
n est 0 ou un nombre entier allant de 1 à 2 000,
o est 0 ou un nombre entier allant de 1 à 2 000, de préférence de 0 à 500,
étant entendu qu'ils contiennent au moins un radical A par molécule.

8. Procédé selon la revendication 1 ou 2, **caractérisé en ce qu'**on utilise comme composés organosiliciés (2) comportant des radicaux carboxy ceux de formule
[AᵥR₃₋ᵥSiO_{½}]ₛ [SiO_{4/2}] (III''')
dans laquelle A et R ont les significations indiquées pour ces radicaux dans la revendication 1,
v est 0, 1, 2 ou 3, de préférence 0 ou 1,
s peut avoir une valeur allant de 0,2 à 6, de préférence de 0,4 à 4, et qui décrit le nombre des unités M [AᵥR₃₋ᵥSiO_{1/2}] par unité Q [SiO_{4/2}],
étant entendu qu'ils contiennent au moins un radical A par molécule.

9. Procédé selon l'une quelconque des revendications 1 à 8, **caractérisé en ce qu'**on utilise comme médiateur (3) des radicaux nitroxyle de formule 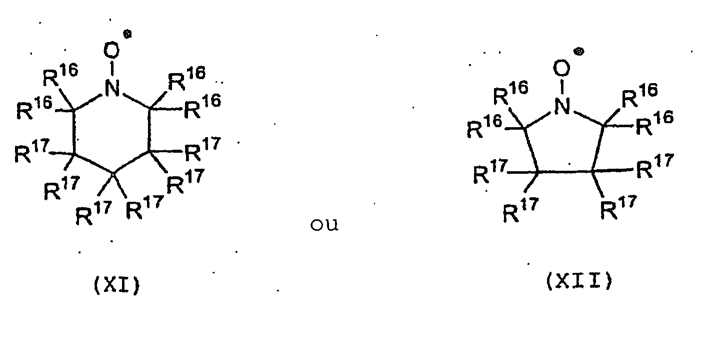 formules dans lesquelles
R¹⁶ sont identiques ou différents et représentent un radical phényle, aryl-alkyle(C₁-C₅), alkyle en C₁-C₁₂, alcoxy en C₁-C₅, carbonyle en C₁-C₁₀ ou carbonyl-alkyle(C₁-C₆),
les radicaux phényle pouvant être non substitués ou une ou plusieurs fois substitués par un radical R¹⁸, et les radicaux aryl-alkyle(C₁-C₅), alkyle en C₁-C₁₂, alcoxy en C₁-C₅, carbonyle en C₁-C₁₀ et carbonyl-alkyle(C₁-C₆) pouvant être saturés ou insaturés, ramifiés ou non ramifiés et pouvant être une ou plusieurs fois substitués par un radical R¹⁸, R¹⁸ pouvant être présent une ou plusieurs fois et les radicaux R¹⁸ pouvant être identiques ou différents et représentant des radicaux hydroxy, formyle, carboxy, ester ou sel du radical carboxy, carbamoyle, sulfono, sulfamoyle, nitro, nitroso, amino, phényle, benzoyle, alkyle en C₁-C₅, alcoxy en C₁-C₅, alkyl(C₁-C₅)-carbonyle,
R¹⁷ sont identiques ou différents et représentent un atome d'hydrogène ou un radical hydroxy, mercapto, formyle, cyano, carbamoyle, carboxy, ester ou sel du radical carboxy, sulfono, ester ou sel du radical sulfono, sulfamoyle, nitro, nitroso, amino, phényle, aryl-alkyle(C₁-C₅), alkyle en C₁-C₁₂, alcoxy en C₁-C₅, carbonyle en C₁-C₁₀ et carbonyl-alkyle(C₁-C₆), phospho-, phosphono, phosphono-oxy, ester ou sel du radical phosphonooxy,
les radicaux carbamoyle, sulfamoyle, amino, mercapto et phényle pouvant être non substitués ou une ou plusieurs fois substitués par un radical R¹²,
et les radicaux aryl-alkyle(C₁-C₅), alkyle en C₁-C₁₂, alcoxy en C₁-C₅, carbonyle en C₁-C₁₀ et carbonyl-alkyle(C₁-C₆) pouvant être saturés ou insaturés, ramifiés ou non ramifiés et pouvant être une ou plusieurs fois substitués par un radical R¹²,
et un groupe [-CR¹⁷R¹⁷-] pouvant être remplacé par un atome d'oxygène, un radical imino éventuellement substitué par alkyle en C₁-C₅, un radical (hydroxy)imino, une fonction carbonyle ou une fonction vinylidène éventuellement mono- ou disubstituée par R¹²,
et deux groupes [-CR¹⁷R¹⁷-] voisins pouvant être remplacés par un groupe [-CR¹⁷=CR¹⁷-], [-CR¹⁷=N-] ou [-CR¹⁷=N(O)-],
R¹² pouvant être présent une ou plusieurs fois et les radicaux R¹² étant identiques ou différents et représentant un radical hydroxy, formyle, cyano, carboxy, ester ou sel du radical carboxy, un radical carbamoyle, sulfono, sulfamoyle, nitro, nitroso, amino, phényle, alkyle en C₁-C₅, alcoxy en C₁-C₅, alkyl(C₁-C₅)-carbonyle.

10. Procédé selon la revendication 9, **caractérisé en ce que** les radicaux nitroxy de formules (XI) et (XII) sont reliés par un ou plusieurs radicaux R¹⁷ ayant une structure polymère.

11. Procédé selon la revendication 9 ou 10, **caractérisé en ce qu'**on utilise comme médiateur (3) ceux choisis dans le groupe constitué par
le 2,2,6,6-tétraméthyl-pipéridin-1-oxyle (TEMPO),
le 4-hydroxy-2,2,6,6-tétraméthyl-pipéridin-1-oxyle,
le 4-acétamido-2,2,6,6-tétraméthyl-pipéridin-1-oxyle,
le 4-acétoxy-2,2,6,6-tétraméthyl-pipéridin-1-oxyle,
le 4-benzoyloxy-2,2,6,6-tétraméthyl-pipéridin-1-oxyle et
le PIPO (pipéridinyloxyle immobilisé en polymère).

12. Procédé selon l'une quelconque des revendications 1 à 11, **caractérisé en ce que** le médiateur (3) est utilisé en quantités de 0,01 à 100 % en moles, par rapport à la quantité des groupes carbinol contenus dans le composé organosilicié utilisé.

13. Procédé selon l'une quelconque des revendications 1 à 12, **caractérisé en ce qu'**on utilise comme oxydant (4) ceux choisis dans le groupe constitué par l'air, l'oxygène, le peroxyde d'hydrogène, des peroxydes organiques, des perborates et des persulfates, des peracides organiques ou inorganiques, des sels et dérivés des peracides, le chlore, le brome, l'iode, des acides hypohalogéneux ainsi que leurs sels, par exemple sous forme de lessives de blanchiment, des acides halogéneux ainsi que leurs sels, des acides halogénés ainsi que leurs sels, Fe(CN)₆³⁻ et des composés azotés chlorés,
ceux-ci pouvant éventuellement être utilisés chacun en association avec des enzymes.

14. Procédé selon l'une quelconque des revendications 1 à 13, **caractérisé en ce qu'**on utilise l'oxydant (4), dans le cas où il s'agit d'un oxydant à 2 électrons, en quantités de 0,2 à 250 % en moles, ou bien, dans le cas où il s'agit d'un oxydant à 1 électron, en quantités de 0,4 à 500 % en moles, chaque fois par rapport à la quantité molaire des groupes carbinol contenus dans les composés organosiliciés utilisés.

15. Procédé selon l'une quelconque des revendications 1 à 12, **caractérisé en ce qu'**on utilise comme oxydant (4) des oxydes métalliques ou des anodes de cellules électrolytiques.

16. Procédé selon l'une quelconque des revendications 1 à 15, **caractérisé en ce qu'**il est effectué en continu.
